(19) Europäisches Patentamt

European Patent Office

Office européen des brevets

(11) **EP 1 207 529 A2**

(12) **EUROPEAN PATENT APPLICATION**

(43) Date of publication:
**22.05.2002 Bulletin 2002/21**

(51) Int Cl.⁷: **G11B 20/00**, G06F 1/00

(21) Application number: **01124996.8**

(22) Date of filing: **19.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.10.2000 JP 2000320346**

(71) Applicant: **Pioneer Corporation
Tokyo-to (JP)**

(72) Inventors:
• **Namiki, Tsuyoshi, c/o Pioneer Corporation
Tokorozawa-shi, Saitama-ken (JP)**

• **Moriyama, Yoshiaki, c/o Pioneer Corporation
Tokorozawa-shi, Saitama-ken (JP)**
• **Ajima, Kosuke, c/o Pioneer Corporation
Tokorozawa-shi, Saitama-ken (JP)**
• **Suzuki, Toshio, c/o Pioneer Corporation
Tokorozawa-shi, Saitama-ken (JP)**
• **Terao, Kyoichi, c/o Pioneer Corporation
Tokorozawa-shi, Saitama-ken (JP)**

(74) Representative:
**Reinhard - Skuhra - Weise & Partner
Postfach 44 01 51
80750 München (DE)**

(54) **Information recording apparatus and method, information reproducing apparatus and method, and information recording medium with reproducing limit information**

(57) Recording information is recorded after adding reproducing limit information (PC) for controlling the number of reproducing times to the recording information and embedding the identical reproducing limit information (PC) thereon separately from the above in a way of preventing illegal detection. Then, after confirming a coincidence between the reproducing limit information (PC) added and the reproducing limit information (PC) embedded, the recording information is controlled to be supplied to an external source according to the same reproducing limit information (PC).

FIG. 1

## Description

BACKGROUNDS OF THE INVENTION

The present invention relates to a technical field of an information recording apparatus, an information recording method, an information reproducing apparatus, an information reproducing method, and an information recording medium. More particularly, it relates to a technical field of the information recording apparatus and information recording method for recording information in a recording medium while securing the copyright thereof, the information reproducing apparatus and information reproducing method for reproducing the recorded information while securing the copyright thereof, and the information recording medium storing a recording control program for the information recording recorded there as well as the information recording medium storing a reproducing control program for the information reproducing recorded there.

Recently, the study and development of distributing AV (Audio Visual) information of music, movie, or the like (hereinafter, referred to as contents simply) by wireless or radio communication through a network such as the Internet and recording the distributed contents into a high-density recording medium, for example, a DVD, has been widely performed.

Generally, distributing source has a copyright of the distributed contents, and therefore, the distributed contents often include reproducing limit information (control information) indicating the number of reproducing times after the recording into the same recording medium (for example, indicating that reproducing is permitted three times at maximum after the recording into the recording medium) or the reproducing period (reproducing expiry date, for example, indicating that they can be reproduced until the end of Oct., 2000 after the recording into the recording medium). In the case of exceeding the number or the reproducing expiry date in the reproducing limit information, a record player which has received the contents is not allowed to reproduce the contents.

However, it is said that the reproducing limit information is tampered easier in the above mentioned recording medium such as a DVD than in the case of the recording into a semiconductor memory, for example, an IC (Integrated Circuit) card. This is why the information detection and the information recording are permitted from and in the overall recording medium.

If the reproducing limit information is tampered, for example, the number of the reproduceable times is rewritten from three times to 100 times, the original copyright protection is completely of no use, which results in extravagant disadvantages for the distributing source of the contents.

SUMMARY OF THE INVENTION

In consideration of the above problem, an object of the present invention is to provide an information recording apparatus and an information recording method capable of recording the contents while securing the copyright thereof, an information reproducing apparatus and an information reproducing method capable of reproducing the recorded information while securing the copyright thereof, and an information recording medium storing a recording control program for the information recording recorded there and an information recording medium storing a reproducing control program for the information reproducing recorded there, by effectively preventing the reproducing of the recording information including the reproducing limit information which may be tampered illegally.

The above object of the present invention can be achieved by an information recording apparatus of the present invention for recording reproducing limit information for controlling reproducing manner of recording information which is encrypted and supplied from an external source to be recorded in a recording medium, together with the recording information, into the recording medium. The apparatus is provided with: an adding device for adding the reproducing limit information to the supplied recording information to generate added recording information; an embedding device for embedding the reproducing limit information on the recording information within the generated added recording information in a way of preventing from illegal detection to generate embedded recording information; and a recording device for recording the generated embedded recording information into the recording medium.

According to the information recording apparatus of the present invention, the reproducing limit information is added to the recording information and the identical reproducing limit information is embedded thereon separately from this in a way of preventing of illegal detection. Then, a coincidence between the reproducing limit information added and the reproducing limit information embedded is confirmed at the reproducing of the recording information, and thereafter, the recording information is controlled to be supplied to the outside according to the same reproducing limit information. Therefore, even if the added reproducing limit information is tampered illegally, the reproducing and output of the recording information according to the tampered information can be prevented. As a result, the reproducing of the recording information which may be tampered illegally can be prevented effectively, thereby recording the recording information while securing the copyright thereof.

In one aspect of the information recording apparatus of the present invention present, the embedding device embeds correspondence information corresponding to the reproducing limit information in one-to-one and having smaller information amount than the reproducing limit information, on the recording information, in a way of preventing from illegal detection to generate the embedded recording information.

According to this aspect, since the correspondence information corresponding to the reproducing limit information in one-to-one and having smaller information amount is embedded on the recording information, it can be confirmed whether the reproducing limit information (correspondence information) is tampered or not by the easy operation at the reproducing of the recording information.

In another aspect of the information recording apparatus of the present invention present, the embedding device is provided with: a replacement information generating device for generating replacement information by using the reproducing limit information; and a replacing device for replacing one part of the recording information with the generated replacement information to generate the embedded recording information

According to this aspect, since one part of the recording information is replaced with the replacement information corresponding to the reproducing limit information to generate the embedded recording information, the reproducing limit information can be embedded on the recording information in a way of preventing from illegal detection without fail.

In further aspect of the information recording apparatus of the present invention present, the information recording apparatus is further provided with: a detecting device for detecting identification information particular to each recording medium and previously recorded in the recording medium, prior to the recording of the embedded recording information; and a key information generating device for generating key information for encrypting cryptographic information used for encrypting the recording information, by using the detected identification information, wherein the embedding device embeds the generated key information on start information detected at starting the reproducing of the recording information to generate embedded start information, prior to the recording of the embedded recording information, and the recording device records the generated embedded start information into a start information recording area that is an area on the recording medium where the start information is to be recorded, prior to the recording of the embedded recording information,

According to this aspect, the key information for encrypting the cryptographic information is recorded within the start information recording area. Then, the cryptographic information is encrypted by using the key information and recorded at the original recording of the recording information, and the encrypted cryptographic information is decoded by using the same key information at the reproducing of the recording information, and thereafter, the cryptographic information is used for decoding the recording information, thereby preventing from illegal reproducing of the recording information effectively.

In further aspect of the information recording apparatus of the present invention present, the information recording apparatus is further provided with: a detecting device for detecting the key information from the start information recording area when recording the embedded recording information into the recording medium; and a cryptographic information encrypting device for encrypting the cryptographic information by using the key information to generate encrypted cryptographic information, wherein the adding device adds the reproducing limit information and the encrypted cryptographic information to the recording information when recording the embedded recording information into the recording medium to generate the added recording information.

According to this aspect, the key information for encrypting the cryptographic information is recorded within the start information recording area and the cryptographic information is encrypted by using the key information and then recorded at the original recording of the recording information. Further, the encrypted cryptographic information is decoded by using the same key information at the reproducing of the recording information and the cryptographic information is used for decoding the recording information, thereby preventing from illegal reproducing of the recording information effectively.

In further aspect of the information recording apparatus of the present invention present, the information recording apparatus is further provided with: a detecting device for detecting identification information particular to each recording medium and previously recorded in the recording medium, prior to the recording of the embedded recording information; and a key information generating device for generating key information for encrypting cryptographic information used for encrypting the recording information, by using the detected identification information, wherein the embedding device embeds the generated key information on content information indicating the content of the recording information to generate embedded content information, prior to the recording of the embedded recording information, and the recording device records the generated embedded content information in the recording medium.

According to this aspect, the key information for encrypting the cryptographic information is recorded in the recording medium. Then, the cryptographic information is encrypted by using the key information and thereafter recorded at the original recording of the recording information, and the encrypted cryptographic information is decoded by using the same key information at the reproducing of the recording information, to be used for decoding the recording information, thereby preventing from illegal reproducing of the recording information effectively.

In further aspect of the information recording apparatus of the present invention present, the information recording apparatus is further provided with: a detecting device for detecting the key information from the recording medium when recording the embedded recording information into the recording medium; and a cryptographic information encrypting device for encrypting the cryptographic information by using the key information to generate the encrypted cryptographic information, wherein the adding device adds the reproducing limit information and the encrypted cryptographic information to the recording information to generate the added recording information, when recording the embedded recording information into the recording medium.

According to this aspect, the key information for encrypting the cryptographic information is recorded in the recording medium. Then, the cryptographic information is encrypted by using the key information and recorded at the original recording of the recording information, the encrypted cryptographic information is decoded by using the same key information at the reproducing of the recording information. Further, the cryptographic information is used for decoding the recording information, thereby preventing from illegal reproducing of the recording information effectively.

The above object of the present invention can be achieved by an information reproducing apparatus of the present invention for reproducing recording information, which is encrypted and recorded with an reproducing limit information for controlling reproducing manner of the recording information in a recording medium, based on the reproducing limit information, said reproducing limit information which is added to the recording information and also embedded on the recording information in a way of preventing from illegal detection. The information reproducing apparatus is provided with: a reproducing limit information detecting device for detecting the added reproducing limit information; a reproducing limit information extracting device for extracting the embedded reproducing limit information from the recording information; a recording information extracting device for extracting original recording information from the recording information on which the reproducing limit information is embedded; and an output control device for, only when the detected reproducing limit information matches the extracted reproducing limit information, supplying the extracted original recording information based on the reproducing limit information.

According to the information reproducing apparatus of the present invention, since a coincidence between the reproducing limit information added and the reproducing limit information embedded is confirmed and thereafter, the recording information is controlled to be supplied to the outside according to the same reproducing limit information, the reproducing and output of the recording information according to the tampered information can be prevented even if the added reproducing limit information is tampered. As a result, the reproducing of the recording information which may be tampered illegally can be prevented effectively, thereby recording the recording information while securing the copyright thereof.

In one aspect of the information reproducing apparatus of the present invention, said recording medium has a start information recording area, in which start information detected at starting the reproducing of the recording information is recorded. Then, key information for encrypting cryptographic information used for encrypting the recording information is embedded on said start information. Said key information is generated by using identification information particular to each recording medium and recorded in the recording medium. Said cryptographic information is encrypted by using the key information and added to the recording information to which the reproducing limit information is added. Further, said information reproducing apparatus is further provided with: a key information detecting device for detecting the key information from the start information recording area; an encrypted cryptographic information detecting device for detecting the encrypted cryptographic information from the recording medium; an obtaining device for decoding the detected encrypted cryptographic information by using the detected key information and obtaining original cryptographic information; and a decoding device for decoding the extracted original recording information by using the obtained original cryptographic information and supplying the decoded recording information to the output control device.

According to the information reproducing apparatus of the present invention, since the encrypted cryptographic information is decoded by using the key information and then the cryptographic information is used for decoding the recording information, illegal reproducing of the recording information can be prevented effectively.

In another aspect of the information reproducing apparatus of the present invention, in said recording medium, content information indicating the content of the recording information is recorded, On said content information, key information for encrypting cryptographic information used for encrypting the recording information is embedded. Said key information is generated by using identification information particular to each recording medium and recorded in the recording medium. Said cryptographic information is encrypted by using the key information and added to the recording information to which the reproducing limit information is added. Further, said information reproducing apparatus is further provided with: a key information detecting device for detecting the key information from the recording medium; an encrypted cryptographic information detecting device for detecting the encrypted cryptographic information from the recording medium; an obtaining device for decoding the detected encrypted cryptographic information by using the detected key information and obtaining original cryptographic information; and a decoding device for decoding the extracted original recording information by using the obtained original cryptographic information and supplying the decoded recording information to the output control device.

According to this aspect, since the encrypted cryptographic information is decoded by using the key information and then the cryptographic information is used for decoding the recording information, illegal reproducing of the recording information can be prevented effectively.

The above object of the present invention can be achieved by an information recording method of the present invention for recording reproducing limit information for controlling reproducing manner of recording information which is encrypted and supplied from an external source to be recorded in a recording medium, together with the recording information, into the recording medium. The method is provided with: an adding process for adding the reproducing limit information to the supplied recording information to generate added recording information; an embedding process for embedding the reproducing limit information on the recording information within the generated added recording information in a way of preventing from illegal detection to generate embedded recording information; and a recording process for recording the generated embedded recording information into the recording medium.

According to the information recording method of the present invention, the reproducing limit information is added to the recording information and the identical reproducing limit information is embedded thereon separately from this in a way of preventing of illegal detection. Then, a coincidence between the reproducing limit information added and the reproducing limit information embedded is confirmed at the reproducing of the recording information, and thereafter, the recording information is controlled to be supplied to the outside according to the same reproducing limit information. Therefore, even if the added reproducing limit information is tampered illegally, the reproducing and output of the recording information according to the tampered information can be prevented. As a result, the reproducing of the recording information which may be tampered illegally can be prevented effectively, thereby recording the recording information while securing the copyright thereof.

In one aspect of the information recording method of the present invention, the embedding process embeds correspondence information corresponding to the reproducing limit information in one-to-one and having smaller information amount than the reproducing limit information, on the recording information, in a way of preventing from illegal detection to generate the embedded recording information.

According to this aspect, since the correspondence information corresponding to the reproducing limit information in one-to-one and having smaller information amount is embedded on the recording information, it can be confirmed whether the reproducing limit information (correspondence information) is tampered or not by the easy operation at the reproducing of the recording information.

In another aspect of the information recording method of the present invention, the embedding process is provided with: a replacement information generating process for generating replacement information by using the reproducing limit information; and a replacing process for replacing one part of the recording information with the generated replacement information to generate the embedded recording information.

According to this aspect, since one part of the recording information is replaced with the replacement information corresponding to the reproducing limit information to generate the embedded recording information, the reproducing limit information can be embedded on the recording information in a way of preventing from illegal detection without fail.

In another aspect of the information recording method of the present invention, the information recording method is further provided with: a detecting process for detecting identification information particular to each recording medium and previously recorded in the recording medium, prior to the recording of the embedded recording information; and a key information generating process for generating key information for encrypting cryptographic information used for encrypting the recording information, by using the detected identification information, wherein the embedding process embeds the generated key information on start information detected at starting the reproducing of the recording information to generate embedded start information, prior to the recording of the embedded recording information, and the recording process records the generated embedded start information into a start information recording area that is an area on the recording medium where the start information is to be recorded, prior to the recording of the embedded recording information.

According to this aspect, the key information for encrypting the cryptographic information is recorded within the start information recording area. Then, the cryptographic information is encrypted by using the key information and recorded at the original recording of the recording information, and the encrypted cryptographic information is decoded by using the same key information at the reproducing of the recording information, and thereafter, the cryptographic information is used for decoding the recording information, thereby preventing from illegal reproducing of the recording information effectively.

In further aspect of the information recording method of the present invention, the information recording method is further provided with: a detecting process for detecting the key information from the start information recording area when recording the embedded recording information into the recording medium; and a cryptographic information encrypting process for encrypting the cryptographic information by using the key information to generate encrypted cryptographic information, wherein the adding process adds the reproducing limit information and the encrypted cryptographic information to the recording information when recording the embedded recording information into the recording medium to generate the added recording information.

According to this aspect, the key information for encrypting the cryptographic information is recorded within the start information recording area and the cryptographic information is encrypted by using the key information and then recorded at the original recording of the recording information. Further, the encrypted cryptographic information is decoded by using the same key information at the reproducing of the recording information and the cryptographic information is used for decoding the recording information, thereby preventing from illegal reproducing of the recording information effectively.

In further aspect of the information recording method of the present invention, the information recording method is furthe provided with: a detecting process for detecting identification information particular to each recording medium and previously recorded in the recording medium, prior to the recording of the embedded recording information; and a key information generating process for generating key information for encrypting cryptographic information used for encrypting the recording information, by using the detected identification information, wherein the embedding process embeds the generated key information on content information indicating the content of the recording information to generate embedded content information, prior to the recording of the embedded recording information, and the recording process records the generated embedded content information in the recording medium.

According to this aspect, the key information for encrypting the cryptographic information is recorded in the recording medium. Then, the cryptographic information is encrypted by using the key information and thereafter recorded at the original recording of the recording information, and the encrypted cryptographic information is decoded by using the same key information at the reproducing of the recording information, to be used for decoding the recording information, thereby preventing from illegal reproducing of the recording information effectively.

In further aspect of the information recording method of the present invention, the information recording method is further provided with: a detecting process for detecting the key information from the recording medium when recording the embedded recording information into the recording medium; and a cryptographic information encrypting process for encrypting the cryptographic information by using the key information to generate the encrypted cryptographic information, wherein the adding process adds the reproducing limit information and the encrypted cryptographic information to the recording information to generate the added recording information, when recording the embedded recording information into the recording medium.

According to this aspect, the key information for encrypting the cryptographic information is recorded in the recording medium. Then, the .cryptographic information is encrypted by using the key information and recorded at the original recording of the recording information, the encrypted cryptographic information is decoded by using the same key information at the reproducing of the recording information. Further, the cryptographic information is used for decoding the recording information, thereby preventing from illegal reproducing of the recording information effectively.

The above object of the present invention can be achieved by an information reproducing method of the present invention for reproducing recording information, which is encrypted and recorded with an reproducing limit information for controlling reproducing manner of the recording information in a recording medium, based on the reproducing limit information, said reproducing limit information which is added to the recording information and also embedded on the recording information in a way of preventing from illegal detection The method is provided with: a reproducing limit information detecting process for detecting the added reproducing limit information; a reproducing limit information extracting process for extracting the embedded reproducing limit information from the recording information; a recording information extracting process for extracting original recording information from the recording information on which the reproducing limit information is embedded; and an output control process for, only when the detected reproducing limit information matches the extracted reproducing limit information, supplying the extracted original recording information based on the reproducing limit information.

According to the information reproducing method of the present invention, since a coincidence between the reproducing limit information added and the reproducing limit information embedded is confirmed and thereafter, the recording information is controlled to be supplied to the outside according to the same reproducing limit information, the reproducing and output of the recording information according to the tampered information can be prevented even if the added reproducing limit information is tampered. As a result, the reproducing of the recording information which may be tampered illegally can be prevented effectively, thereby recording the recording information while securing the copyright thereof.

In one aspect of the information reproducing method of the present invention, said recording medium has a start information recording area, in which start information detected at starting the reproducing of the recording information is recorded. Then, key information for encrypting cryptographic information used for encrypting the recording information is embedded on said start information. Said key information is generated by using identification information particular to each recording medium and recorded in the recording medium. Said cryptographic information is encrypted by using the key information and added to the recording information to which the reproducing limit information is added. Further, said information reproducing method is further provided with: a key information detecting process for detecting the key information from the start information recording area; an encrypted cryptographic information detecting process for detecting the encrypted cryptographic information from the recording medium; an obtaining process for decoding the detected encrypted cryptographic information by using the detected key information and obtaining original cryptographic information; and a decoding process for decoding the extracted original recording information by using the obtained original cryptographic information and supplying the decoded recording information to the output control process.

According to this aspect, since the encrypted cryptographic information is decoded by using the key information and then the cryptographic information is used for decoding the recording information, illegal reproducing of the recording information can be prevented effectively.

In another aspect of the information reproducing method of the present invention, in said recording medium, content information indicating the content of the recording information is recorded. On said content information, key information for encrypting cryptographic information used for encrypting the recording information is embedded Said key information is generated by using identification information particular to each recording medium and recorded in the recording medium. Said cryptographic information is encrypted by using the key information and added to the recording information to which the reproducing limit information is added. Further, said information reproducing method is further provided With; a key information detecting process for detecting the key information from the recording medium; an encrypted cryptographic information detecting process for detecting the encrypted cryptographic information from the recording medium; an obtaining process for decoding the detected encrypted cryptographic information by using the detected key information and obtaining original cryptographic information, and a decoding process for decoding the extracted original recording information by using the obtained original cryptographic information and supplying the decoded recording information to the output control process

According to this aspect, since the encrypted cryptographic information is decoded by using the key information and then the cryptographic information is used for decoding the recording information, illegal reproducing of the recording information can be prevented effectively.

The above object of the present invention can be achieved by an information recording medium of the present invention in which a recording control program is recorded in a readable way by a recording computer included in an information recording apparatus for recording reproducing limit information for controlling reproducing manner of recording information which is encrypted and supplied from an external source to be recorded in a recording medium, together with the recording information, into the recording medium. The recording program causes the recording computer to function as: an adding device for adding the reproducing limit information to the supplied recording information to generate added recording information; an embedding device for embedding the reproducing limit information on the recording information within the generated added recording information in a way of preventing from illegal detection to generate embedded recording information; and a recording device for recording the generated embedded recording information into the recording medium.

According to the information recording medium of the present invention, the recording computer works so as to add the reproducing limit information to the recording information and embed the identical reproducing limit information thereon separately from this in a way of preventing of illegal detection. Then, a coincidence between the reproducing limit information added and the reproducing limit information embedded is confirmed at the reproducing of the recording information, and thereafter, the recording information is controlled to be supplied to the outside according to the same reproducing limit information. Therefore, even if the added reproducing limit information is tampered illegally, the reproducing and output of the recording information according to the tampered information can be prevented, As a result, the reproducing of the recording information which may be tampered illegally can be prevented effectively, thereby recording the recording information while securing the copyright thereof.

In one aspect of the information recording medium of the present invention, the embedding device embeds correspondence information corresponding to the reproducing limit information in one-to-one and having smaller information amount than the reproducing limit information, on the recording information, in a way of preventing from illegal detection to generate the embedded recording information.

According to this aspect, since the recording computer works so as to superimpose the correspondence information corresponding to the reproducing limit information in one-to-one and having smaller information amount, on the recording information, it can be confirmed whether the reproducing limit information (correspondence information) is tampered or not by the easy operation at the reproducing of the recording information.

In another aspect of the information recording medium of the present invention, the embedding device is provided with: a replacement information generating device for generating replacement information by using the reproducing limit information; and a replacing device for replacing one part of the recording information with the generated replacement information to generate the embedded recording information.

According to this aspect, since the recording computer works so as to replace one part of the recording information with the replacement information corresponding to the reproducing limit information and generate the embedded recording information, the reproducing limit information can be embedded on the recording information in a way of preventing from illegal detection without fail

In another aspect of the information recording medium of the present invention, said recording program causes the recording computer to further function as: a detecting device for detecting identification information particular to each recording medium and previously recorded in the recording medium, prior to the recording of the embedded recording information; and a key information generating device for generating key information for encrypting cryptographic information used for encrypting the recording information, by using the detected identification information, wherein the embedding device embeds the generated key information on start information detected at starting the reproducing of the recording information to generate embedded start information, prior to the recording of the embedded recording information, and the recording device records the generated embedded start information into a start information recording area that is an area on the recording medium where the start information is to be recorded, prior to the recording of the embedded recording information.

According to this aspect, the recording computer works so as to record the key information for encrypting the cryptographic information within the start information recording area. The cryptographic information is encrypted by using the key information and then recorded at the original recording of the recording information. The encrypted cryptographic information is decoded by using the same key information at the reproducing of the recording information, and thereafter, the cryptographic information is used for decoding the recording information, thereby preventing from illegal reproducing of the recording information effectively.

In further aspect of the information recording medium of the present invention, said recording program causes the recording computer to further function as: a detecting device for detecting the key information from the start information recording area when recording the embedded recording information into the recording medium; and a cryptographic information encrypting device for encrypting the cryptographic information by using the key information to generate encrypted cryptographic information, wherein the adding device adds the reproducing limit information and the encrypted cryptographic information to the recording information when recording the embedded recording information into the recording medium to generate the added recording information.

According to this aspect, the recording computer works so as to record the key information for encrypting the cryptographic information within the start information recording area. The encrypt the cryptographic information by using the key information, and then record the same information at the original recording of the recording information. The encrypted cryptographic information is decoded by using the same key information at the reproducing of the recording information and the cryptographic information is used for decoding the recording information, thereby preventing from illegal reproducing of the recording information effectively.

In further aspect of the information recording medium of the present invention, said recording program causes the recording computer to further function as: a detecting device for detecting identification information particular to each recording medium and previously recorded in the recording medium, prior to the recording of the embedded recording information; and a key information generating device for generating key information for encrypting cryptographic information used for encrypting the recording information, by using the detected identification information, wherein the embedding device embeds the generated key information on content information indicating the content of the recording information to generate embedded content information, prior to the recording of the embedded recording information, and the recording device records the generated embedded content information in the recording medium.

According to this aspect, the recording computer works so as to record the key information for encrypting the cryptographic information in the recording medium. The cryptographic information is encrypted by using the key information and thereafter recorded at the original recording of the recording information, and the encrypted cryptographic information is decoded by using the same key information at the reproducing of the recording information, to be used for decoding the recording information, thereby preventing from illegal reproducing of the recording information effectively.

In further aspect of the information recording medium of the present invention, said recording program causes the recording computer to further function as a detecting device for detecting the key information from the recording medium when recording the embedded recording information into the recording medium, and a cryptographic information encrypting device for encrypting the cryptographic information by using the key information to generate the encrypted cryptographic information, wherein the adding device adds the reproducing limit information and the encrypted cryptographic information to the recording information to generate the added recording information, when recording the embedded recording information into the recording medium.

According to this aspect, the recording computer works so as to record the key information for encrypting the cryptographic information within the recording medium, encrypt the cryptographic information by using the key information, and then record the same information at the original recording of the recording information. The encrypted cryptographic information is decoded by using the same key information at the reproducing of the recording information, and then the cryptographic information is used for decoding the recording information, thereby preventing from illegal reproducing of the recording information effectively.

The above object of the present invention can be achieved by an information recording medium of the present invention in which a reproducing control program is recorded in a readable way by a reproducing computer included in an information reproducing apparatus for reproducing recording information, which is encrypted and recorded with an reproducing limit information for controlling reproducing manner of the recording information in a recording medium, based on the reproducing limit information, said reproducing limit information which is added to the recording information and also embedded on the recording information in a way of preventing from illegal detection. The reproducing program causes the reproducing computer to function as: a reproducing limit information detecting device for detecting the added reproducing limit information; a reproducing limit information extracting device for extracting the embedded reproducing limit information from the recording information; a recording information extracting device for extracting original recording information from the recording information on which the reproducing limit information is embedded; and an output control device for, only when the detected reproducing limit information matches the extracted reproducing limit information, supplying the extracted original recording information based on the reproducing limit information.

According to the information recording medium of the present invention, the reproducing computer works so as to confirm a coincidence between the reproducing limit information added and the reproducing limit information embedded and thereafter supply the recording information to the outside according to the same reproducing limit information. The reproducing and output of the recording information according to the tampered information can be prevented even if the added reproducing limit information is tampered. As a result, the reproducing of the recording information which may be tampered illegally can be prevented effectively, thereby recording the recording information while securing the copyright thereof.

In one aspect of the information recording medium of the present invention, said recording medium has a start information recording area, in which start information detected at starting the reproducing of the recording information is recorded. Then, key information for encrypting cryptographic information used for encrypting the recording information is embedded on said start information. Said key information is generated by using identification information particular to each recording medium and recorded in the recording medium. Said cryptographic information is encrypted by using the key information and added to the recording information to which the reproducing limit information is added. Further, said reproducing program causes the reproducing computer to further function as: a key information detecting device for detecting the key information from the start information recording area; an encrypted cryptographic information detecting device for detecting the encrypted cryptographic information from the recording medium; an obtaining device for decoding the detected encrypted cryptographic information by using the detected key information and obtaining original cryptographic information; and a decoding device for decoding the extracted original recording information by using the obtained original cryptographic information and supplying the decoded recording information to the output control device.

According to this aspect, since the reproducing computer works so as to decode the encrypted cryptographic information by using the key information and then use the cryptographic information for decoding the recording information, illegal reproducing of the recording information can be prevented effectively.

In another aspect of the information recording medium of the present invention, in said recording medium, content information indicating the content of the recording information is recorded. On said content information, key information for encrypting cryptographic information used for encrypting the recording information is embedded. Said key information is generated by using identification information particular to each recording medium and recorded in the recording medium. Said cryptographic information is encrypted by using the key information and added to the recording information to which the reproducing limit information is added. Further, said reproducing program causes the reproducing computer to further function as; a key information detecting device for detecting the key information from the recording medium; an encrypted cryptographic information detecting device for detecting the encrypted cryptographic information from the recording medium; an obtaining device for decoding the detected encrypted cryptographic information by using the detected key information and obtaining original cryptographic information; and a decoding device for decoding the extracted original recording information by using the obtained original cryptographic information and supplying the decoded recording information to the output control device,

According to this aspect, since the reproducing computer works so as to decode the encrypted cryptographic information by using the key information and then use the cryptographic information for decoding the recording information, illegal reproducing of the recording information can be prevented effectively.

BREIF DESCRIPTION OF THE DRAWINGS

FIG. 1 is a block diagram showing a schematic structure of an information recording apparatus according to the first embodiment of the present invention;

FIG. 2 is a flow chart showing initialization processing of the first embodiment;

FIG. 3 is a flow chart showing recording processing of the first embodiment;

FIG. 4 is a view showing a structure of an ECC block in the data of the embodiment;

FIG. 5 is a view showing a structure of the ECC block after inserting replacement information of the embodiment;

FIG. 6 is a view showing physical format of the data of the embodiment;

FIG. 7 is a block diagram showing a schematic structure of an information reproducing apparatus according to the first embodiment;

FIG. 8 is a flow chart showing the reproducing processing of the first embodiment;

FIG. 9 is a block diagram showing a schematic structure of an information recording apparatus according to the second embodiment of the present invention;

FIG. 10 is a flow chart (I) showing the recording processing of the second embodiment;

FIG. 11 is a flow chart (II) showing the recording processing of the second embodiment; and

FIG. 12 is a flow chart showing the reproducing processing of the second embodiment.

DESCRIPTION OF THE PREFERRED EMBODIMENTS

Preferred embodiments of the present invention will be described with reference to the drawings. Each embodiment described below is in the case of adopting the present invention to a protection of a copyright in an information recording and reproducing system including an information recording apparatus which records the contents distributed through the Internet into an optical disk as a recording medium such as a DVD while securing the copyright thereof, and an information reproducing apparatus which reproduces the recorded contents while securing the copyright thereof.

(I) First embodiment

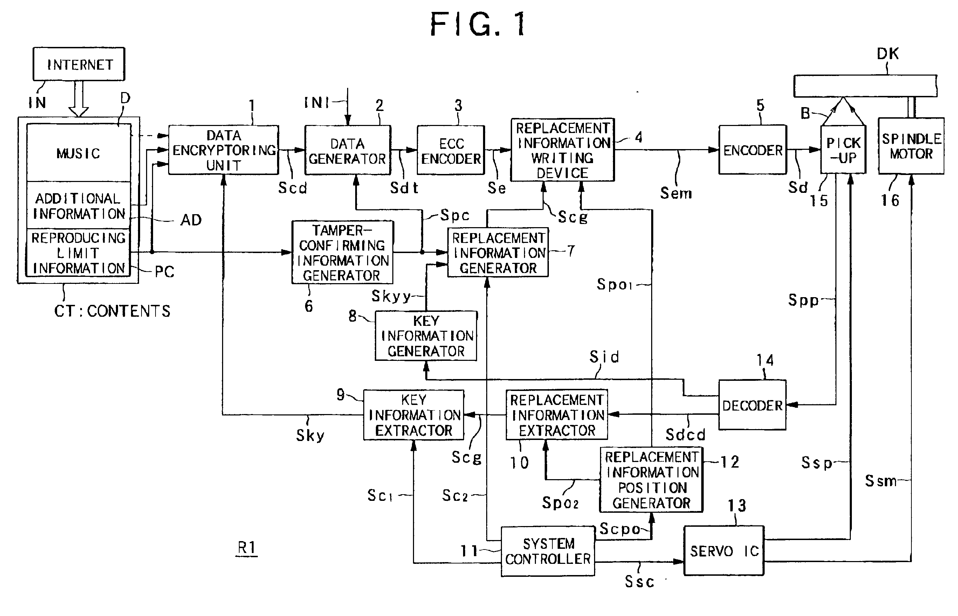

At first, a first embodiment of the present invention will be described with reference to FIGs. 1 to 8.

(A) First embodiment of an information recording apparatus

The first embodiment of the information recording apparatus included in the information recording and reproducing system will be described with reference to FIGs. 1 to 6

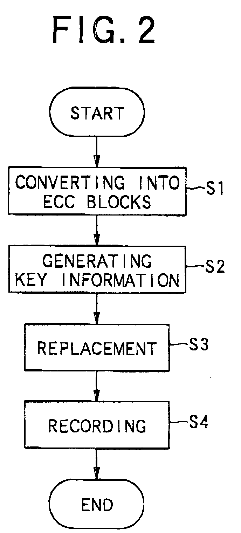

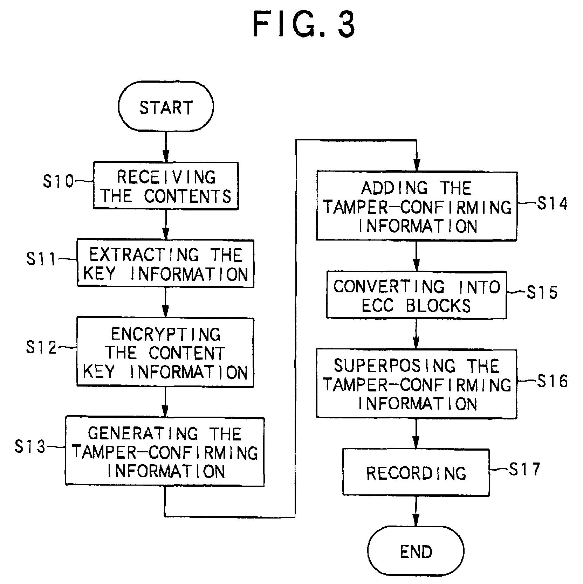

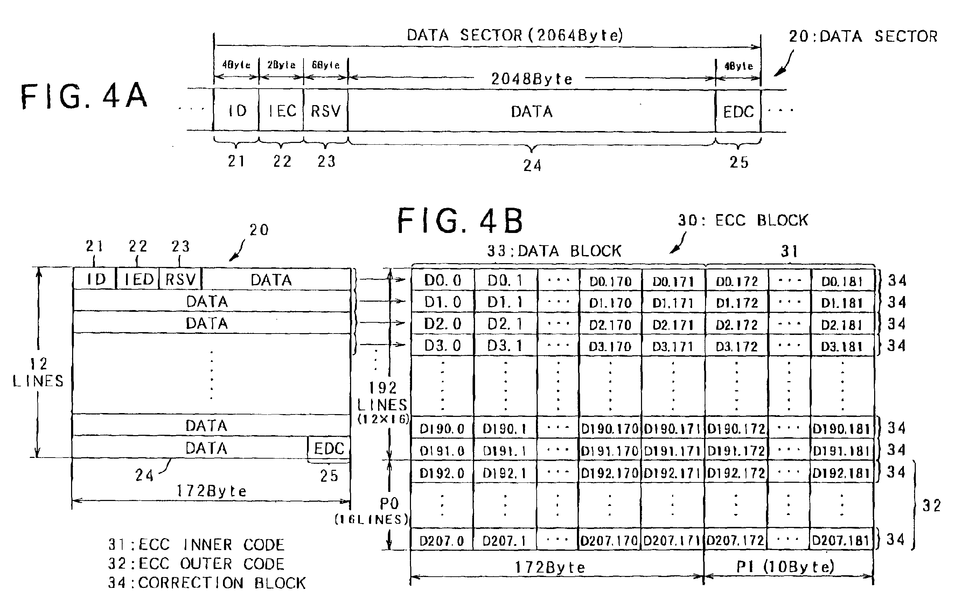

FIG. 1 is a block diagram showing a schematic structure of the information recording apparatus according to the first embodiment, FIG. 2 is a flow chart showing the initialization processing to be executed prior to the information recording as any one of a series of recording processing in the information recording apparatus, FIG. 3 is a flow chart showing the recording processing itself, and FIGs. 4 to 6 are views showing the structure of the respective data in the recording processing.

As illustrated in FIG. 1, an information recording apparatus R1 of the first embodiment is provided with: a data encrypting unit 1 as adding device and cryptographic information encrypting device; a data generator 2; an ECC (Error Correcting Code) encoder 3; a replacement information writing device 4 as embedding device and replacing device; an encoder 5; a tamper-confirming information generator 6; a replacement information generator 7 as replacement information generating device; a key information generator 8; a key information extractor 9 as key information generating device; a replacement information extractor 10; a system controller 11; a replacement information position generator 12; a servo IC 13; a decoder 14; a pickup 15 as recording device and detecting device; and a spindle motor 16.

The operation of the information recording apparatus will be described now.

(a) Embodiment of the disk initialization processing

The initialization processing for initializing a recordable disk DK sold on a market for information recording will be described with reference to FIG. 1 and FIG. 2, before describing the first embodiment of the recording processing of the recording information.

The initialization processing described below is the processing to be executed only once when the purchased disk DK is loaded into the information recording apparatus R1.

Of the above-mentioned components of the information recording apparatus R1, the components provided for the initialization processing are the data generator 2, the ECC encoder 3, the replacement information writing device 4, the encoder 5, the replacement information generator 7, the key information generator 8, the system controller 11, the replacement information position generator 12, the servo IC 13, the decoder 14, the pickup 15, and the spindle motor 16.

Further, identification information (identification symbol) particular to each disk is previously recorded in the disk DK provided to the information recording system of the first embodiment in the manufacturing process.

In the initialization processing, when receiving predetermined initialization information INI from an external source, the data generator 2 generates a generated data signal Sdt corresponding to the initialization information INI and supplies it to the ECC encoder 3.

At this time, the initialization information INI is information recorded within a lead-in area which is formed in the inner peripheral portion of the disk DK according to the embodiment, and further, it includes the start information and the like to be reproduced at starting the reproducing of the contents described later which are recorded on the disk DK.

The ECC encoder 3 converts the initialization information INI included in the generated data signal Sdt into ECC blocks described later, and supplies it as an encode signal Se to the replacement information writing device 4 (Step S1).

In parallel with this, the pickup 15 detects the identification information from the disk DK by using an optical beam B, generates a detected signal Spp including the identification information, and supplies it to the decoder 14.

The decoder 14 extracts the identification information from the detected signal Spp, generates an identification signal Sid, and supplies it to the key information generator 8.

Thus, the key information generator 8 generates key information for encrypting the content key information included in the contents CT described later, by using the identification information, generates a key information signal Skyy including the key information, and supplies it to the replacement information generator 7 (Step S2).

The replacement information generator 7 performs predetermined encrypting processing (more specifically, encrypting processing including bit inversion, shuffle of each bit, or deformation according to a rule decided based on outside elements) on the key information signal Skyy, according to a control signal Sc2 from the system controller 11, generates the replacement information Scg particular to each disk DK, and supplies it to the replacement information writing device 4.

At this time, the data length (the number of bits) of the replacement information Scg is regarded as a data length within the correctable range in the error correcting processing performed on the ECC block during reproducing when the above information is inserted into the ECC block described later.

The replacement information position generator 12 generates position information Spo1 indicating the insertion position into every ECC block included in the encode signal Se of every bit in the generated replacement information Scg, according to a control signal Scpo from the system controller 11, and supplies it to the replacement information writing device 4. At this time, the replacement information position generator 12 generates the position information Spol based on a predetermined insertion table which is used in common with an information reproducing apparatus P described later, the insertion table indicating the insertion position of the replacement information Scg which differs in every ECC block.

Thus, the replacement information writing device 4 inserts the information of every bit in the replacement information Scg into the insertion position within the ECC block indicated by the position information Spol (namely, replaces the information of the insertion position with the information of every bit), generates a replacement data signal Sem, and supplies it to the encoder 5 (Step S3).

The encoder 5 interleaves the ECC blocks included in the replacement data signal Sem and performs the 8-16 modulation on the same blocks, generates a recording data signal Sd, and supplies it to the pickup 15.

The pickup 15 controls the intensity of the optical beam B for recording, based on the recording data signal Sd and forms a corresponding information pit on the information track formed within the area which should be the lead-in area on the disk DK, hence to record the initialization information INI into the area corresponding to the lead-in area, as the recording data signal Sd (Step S4).

At this time, the disk DK is rotated by the predetermined number of rotation by the spindle motor 16 whose rotation is controlled based on a spindle control signal Ssm from the servo IC 13.

A deviation between the condensing position of the optical beam B and the position of the information track on the disk DK in the horizontal and vertical directions can be dissolved, by moving an objective lens, not illustrated, for condensing the optical beam B of the pickup 15, in the horizontal and vertical directions, according to a pickup control signal Ssp from the servo IC 13.

Therefore, the system controller 53 generates a control signal Ssc for supplying the spindle control signal Ssm and the pickup control signal Ssp to the servo IC 13, in addition to the control signals Sc2 and Scpo, and supplies the same signal Ssc to the servo IC 13.

In parallel with the above processing, the system controller 53 generates the respective control signals Sc2, Scpo, and Ssc, so as to control the operation of the above mentioned respective components, and at the same time, it controls the overall information recording apparatus R1 At this time, the information necessary for the control processing is entered from the outside through an operation panel, not illustrated.

Further, the operation state of the information recording apparatus R1 is displayed on a display portion, not illustrated, of a liquid crystal display and the like, depending on the necessity.

According to the above operation of the information recording apparatus R1, the initialization information INI with the key information embedded there is recorded in the lead-in area on the disk DK.

(b) First embodiment of the recording processing

The first embodiment of the recording processing for recording the information in the disk DK which has been subjected to the above initialization processing will be described with reference to FIGs. 3 to 6.

Of the above-mentioned components of the information recording apparatus R1, the components provided for the recording processing are the data encrypting unit 1, the data generator 2, the ECC encoder 3, the replacement information writing device 4, the encoder 5, the tamper-confirming information generator 6, the replacement information generator 7, the key information extractor 9, the replacement information extractor 10, the system controller 11, the replacement information position generator 12, the servo IC 13, the decoder 14, the pickup 15, and the spindle motor 16.

In the recording processing, at first, the contents CT distributed through the Internet IN are received by the data encrypting unit 1 (Step S10).

Here, the contents CT, by way of example, include music D, additional information AD indicating the title of the music, and the reproducing limit information PC indicating the possible number of reproducing times and the possible period of reproducing. They are all supplied to the data encrypting unit 1 and especially the reproducing limit information PC is also supplied to the tamper-confirming information generating unit 6.

At this time, the music D itself has been already encrypted by using the predetermined content key information.

In parallel with this, the pickup 15 detects the key information from the lead-in area of the disk DK by using the optical beam B, generates the detected signal Spp including the key information, and supplies it to the decoder 14.

The decoder 14 decodes the detected signal Spp, generates a decode signal Sdcd, and supplies it to the replacement information extractor 10.

In parallel with this, the replacement information position generator 12 generates the position information Spo2 indicating the insertion position of the replacement information Scg in each ECC block of the decode signal Sdcd, in every ECC block, by using the insertion table, based on the control signal Scpo from the system controller 11, and supplies the same information to the replacement information extractor 10.

In this way, the replacement information extractor 10 extracts the replacement information Scg inserted into the position, from the same position shown by the position information Spo2 described later in every ECC block included in the decode signal Sdcd, and supplies the same information Scg to the key information extractor 9.

The key information extractor 9 extracts the key information recorded together with the initialization information INI, from the replacement information Scg, based on the control signal Sc1 from the system controller 11, generates a key information signal Sky, and supplies it to the data encrypting unit 1 (Step S11).

The data encrypting unit 1 encrypts the content key information supplied together with the music D by using the key information included in the key information signal Sky (Step S12), generates an encrypting signal Scd including the encrypted content key information, the already-encrypted music D, the additional information AD, and the reproducing limit information PC, and supplies the same signal to the data generator 2.

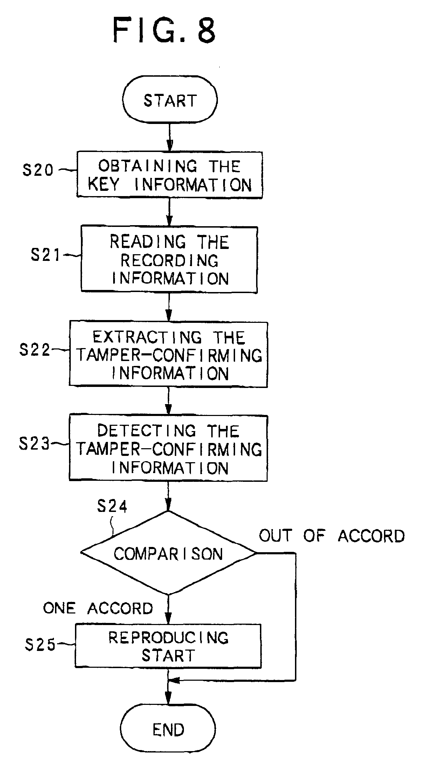

The tamper-confirming information generator 6 generates the correspondence information which is in one-to-one correspondence to the reproducing limit information PC and whose information amount is smaller than that of the reproducing limit information PC (referred to as "tamper-confirming information" in FIG. 3 and in FIG. 8), generates a correspondence signal Spc including the correspondence information, and supplies it to the data generator 2 and the replacement information generator 7 (Step S13).

The data generator 2 adds the correspondence signal Spc to the encrypting signal Scd, generates a generated data signal Sdt including the correspondence signal Spc and the encrypting signal Scd, and supplies it to the ECC encoder 3 (Step S14).

The ECC encoder 3 converts the correspondence signal Spc and the encrypting signal Scd included in the generated data signal Sdt into ECC blocks described later, and supplies the above to the replacement information writing device 4 as an encode signal Se (Step S15).

In parallel with this, the replacement information generator 7 performs the predetermined encrypting processing on the correspondence signal Spc, based on the control signal Sc2 from the system controller 11, generates the replacement information Scg including the correspondence signal Spc, and supplies it to the replacement information writing device 4.

At this time, the data length (the number of bits) of the replacement information Scg is regarded as the data length within the correctable range in the error correcting processing performed on the ECC block during reproducing, when the above information is inserted into the ECC block described later in the same way as in the above-mentioned initialization processing.

The replacement information position generator 12 generates the position information Spo1 indicating the insertion position into every ECC block included in the portion of the music D in the encode signal Se for every bit in the generated replacement information Scg, based on the control signal Scpo from the system controller 11, and supplies the same information Spo1 to the replacement information writing device 4.

Thus, the replacement information writing device 4 inserts the information of every bit in the correspondence signal Spc of the replacement information Scg, into the insertion position within each ECC block included in the portion of the music D indicated by the position information Spo1 (namely, replaces the information of the insertion position with the information of every bit), generates the replacement data signal Sem, and supplies it to the encoder 5 (Step S16).

A state of each data varying from generation of the ECC block to the insertion of the replacement information Scg will be more concretely described with reference to FIG. 4 to FIG. 6.

When forming the ECC block in the recording processing of the embodiment, the structure of the generated data signal Sdt to be recorded is changed to the structure of including a plurality of information units called data sectors.

As illustrated in FIG. 4, the original data to be recorded is divided into 2048-byte data, and the ID information indicating the start position of the data sector and the ID information error correction code for correcting an error of the ID information (IEC (ID Data Error correction Code)) are added to the respective divided data.

Next, reserve data and the error detection code (EDC) for detecting an error in the divided 2048-byte data are added to the generated data, thereby forming one data sector,

The more concrete structure of the data sector will is described here. As illustrated in FIG. 4A, one data sector 20 consists of, from the head thereof, the ID information 21, the ID information error correction code 22, the reserve data 23, the data 24 obtained by dividing the original data, and the error detection code 25. Data to be recorded is formed by a series of these data sectors 20.

When the data sector 20 is formed, the ECC block that is the correction unit in correcting an error during reproducing of the data recorded on the disk DK is generated by the ECC encoder 3, by using the data sector 20, and the encode signal Se including the ECC block is supplied to the replacement information writing device 4.

The ECC block generating process will be described here in more detail. As shown in FIG. 4B, first, the data sector 20 is divided into pieces each containing 172 bytes. Then, each of the divided pieces of data (hereinafter called data block 33) is arranged sequentially in a vertical direction (See the left chart of FIG. 4B) With this arrangement, twelve lines of the data blocks 33 are placed in the vertical direction.

Then, to each of the data blocks 33 placed in the vertical direction, an ECC inner code 31 (also called PI (Parity In) code, and is an error correction code for correcting data within a single lateral line of the ECC block) is added to the end of the corresponding data block 33, to form a correction block 34 (See the right chart of FIG. 4B). At this point therefore, twelve lines of the correction blocks 34 each having the ECC inner code 31 added are in the arrangement in the vertical direction. Thereafter, this process is repeated for sixteen data sectors 20. As a result, a total of 192 lines of the correction blocks 34 are obtained.

Next, with the 192 lines of the correction blocks 34 arranged in the vertical direction, the 192 lines of the correction blocks 34 are then divided into vertical rows of data, at each byte from the head of the blocks. Then, to each of the vertical data rows obtained, sixteen ECC outer codes 32 (also called PO (Parity Out) codes, and are error correction codes for correcting a data within a single vertical row in the ECC block) are added. The ECC outer codes 32 are added also to the portion of the ECC inner codes 31 of the correction blocks 34.

As a result of the processes described above, there is formed one ECC block 30 including sixteen data sectors 20 as shown in the right chart of FIG. 4B, and thus, the added data Sde including the ECC blocks 30 is outputted to the substitute information writer 4.

At this time, a total amount of information contained in one ECC block 30 is given as below:

$$(172 + 10) \text{ bytes} \times (192 + 16) \text{ lines} = 37856 \text{ bytes}$$

Of these, the amount of the actual data 24 is given as below:

$$2048 \text{ bytes} \times 16 = 32768 \text{ bytes}$$

It should be noted that in the ECC block 30 as shown in the right chart of FIG. 4B, one byte of data is shown as "Dm.n". For example, "D1.0" is a one-byte data placed in line one, row zero. Likewise, "D190. 170" is a one-byte data placed in line 190, row 170. Thus, the ECC inner codes 31 are placed in row 172 through row 181, whereas the ECC outer codes 32 are placed in row 192 through row 207.

Further, the correction blocks 34 are recorded as a continual string on the DVD (the stamper disc SP).

As shown in the right chart of FIG. 4B, the ECC block 30 is structured to include both of the ECC inner codes 31 and the ECC outer codes 32. Because of this arrangement, correction of the data arranged in the horizontal direction in the right chart of FIG. 4B can be performed by using the ECC inner codes 31, whereas correction of the data arranged in the vertical direction in the right chart of FIG. 4B can be performed by using the ECC outer codes 32.

Specifically, according to the ECC block 30 shown in the right chart of FIG. 4B, error corrections can be doubly performed in the horizontal direction and in the vertical direction. This results in an enhanced error correcting capability over a prior art error correction procedure used in a conventional CD and so on.

More specific description will be given on this point. For example, even if one correction block 34 (which is a line of data constituted by a total of 182 bytes including an ECC inner code for the line, and recorded continually on the DVD as described above) is totally destroyed by a scratch on the DVD for example, the damage represents a loss of only one byte per a row of ECC outer code 32 when the block is viewed in the vertical direction. Therefore, when error correction is performed by using the ECC outer codes 32 in each of the rows, even if all of one correction block 34 has been destroyed, proper error correction can still be achieved, and therefore it is still possible to perform the playback accurately.

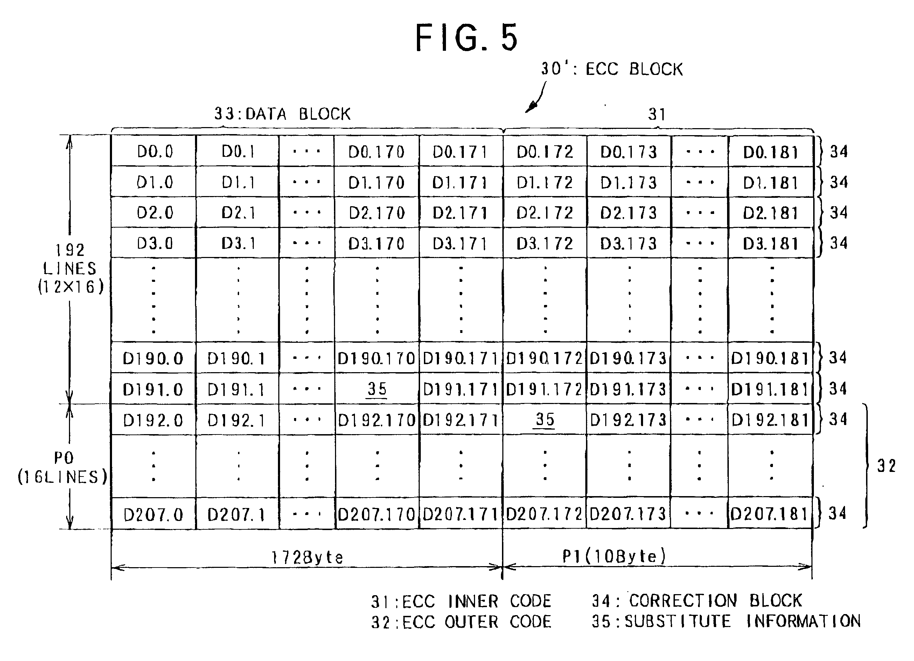

In the replacement information Scg executed successively, for example, one part of the one-byte data in the position within the ECC block indicated by the insertion table (as mentioned above, it is shared with the information reproducing apparatus P described later) corresponding to the position information Spol, is replaced with the replacement information 35 that is the bit data of the replacement information Scg, as illustrated in FIG. 5.

The encoder 5 performs the interleaving and the 8-16 modulation on the ECC block 30, generates the recording data signal Sd, and supplies it to the pickup 15.

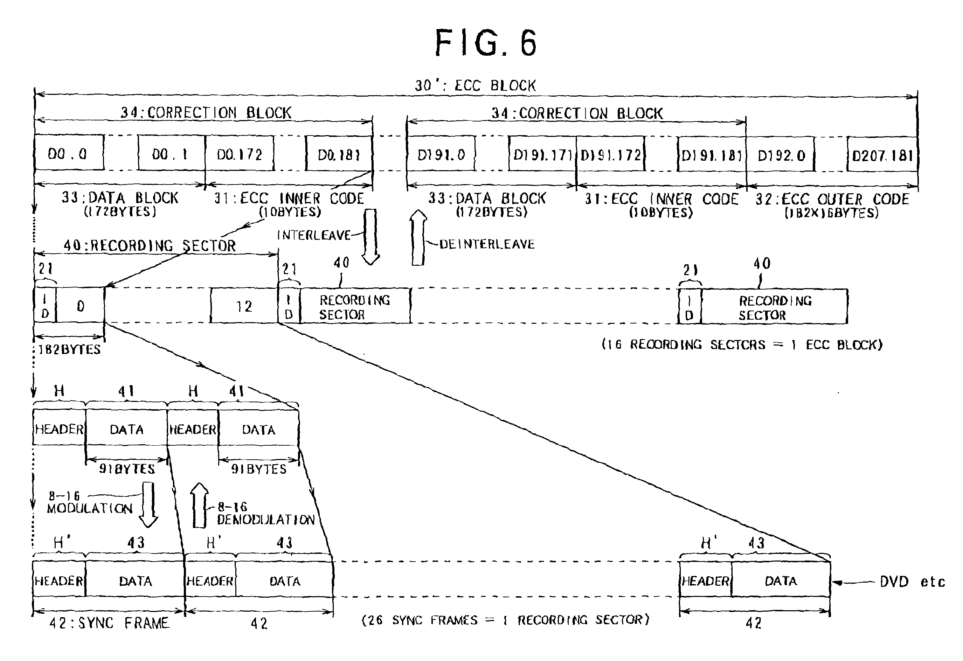

The processing of the encoder 5 will be described specifically, with reference to FIG, 6. Data shown in the "Dm.n" format in FIG. 6 corresponds to the data shown in the right chart of FIG. 4B.

First, when the interleaving is performed to the ECC block 30, first, as shown in the uppermost level in FIG. 6, the ECC block 30 is arranged in a single horizontal string of sequentially connected correction blocks 34. Then, the interleaving is performed by rearranging the string of data under a predetermined rule. As a result, the information as in the ECC block 30' is divided into sixteen recording sectors 40. At this time, each one of the recording sectors 40 contains 2366 bytes (37856 bytes divided by 16) of information, which is a mixture of data sector 20 and ECC inner codes 31 or ECC outer codes 32 and the identification information 35. However, the ID data 21 (See FIG. 4A) of the data sector 20 is placed at the head of each recording sector 40.

Each of the recording sectors 40 is divided into data pieces 41 of 91 bytes, and each of the data pieces is given a header H Thereafter, by performing the 8-16 modulation to the recording sector 40 as under this state, a sync frame 42 is formed for each of the data pieces 41. At this point, each sync frame 42 is constituted by a header H' and a data 43. Amount of information in each sync frame 42 is given as below:

$$91 \text{ bytes} \times 8 \times (16/8) = 1456 \text{ bytes}$$

With the above described arrangement, information written in the DVD takes a form of a continual string of the sync frames 42, in which each of the recording sectors 40 contains twenty six sync frames 42.

The pickup 15 controls the intensity of the recording optical beam B based on the recording data signal Sd and forms the corresponding information pit on the information track formed within the area which should be the data area on the disk DK, thereby recording the music D with the replacement information Scg inserted there, the additional information AD, and the reproducing limit information PC into the area destined to be the data area (Step S17).

At this time, the disk DK is rotated by the predetermined number of rotation by the spindle motor 16 whose rotation is controlled based on the spindle control signal Ssm from the servo IC 13.

A deviation between the condensing position of the optical beam B and the position of the information track on the disk DK in the horizontal direction and the vertical direction can be dissolved by moving the objective lens, not illustrated, for condensing the optical beam B within the pickup 15, in the horizontal direction and the vertical direction, according to the pickup control signal Ssp from the servo IC 13, in the same way as in the initialization processing.

Therefore, the system controller 11 generates a control signal Ssc for supplying the spindle control signal Ssm and the pickup control signal Ssp to the servo IC 13, in addition to the control signals Sc1, Sc2, and the Scpo, and supplies the same signal Ssc to the servo IC 13.

In parallel with this, the system controller 11 controls the operation of the above-mentioned components by generating the respective control signals Sc1, Sc2, Scpo, and Ssc, and controls the overall information recording apparatus R1. The information necessary for the control processing is entered from the outside through an operation panel, not illustrated.

The operation state of the information recording apparatus R1 is displayed on a display unit of a liquid crystal display, not illustrated, depending on the necessity.

According to the above operation of the information recording apparatus R1, the additional information AD, the reproducing limit information PC, and the music D with the reproducing limit information PC embedded there as the replacement information Scg are recorded in the data area on the disk DK.

(B) <u>First embodiment of an information reproducing apparatus</u>

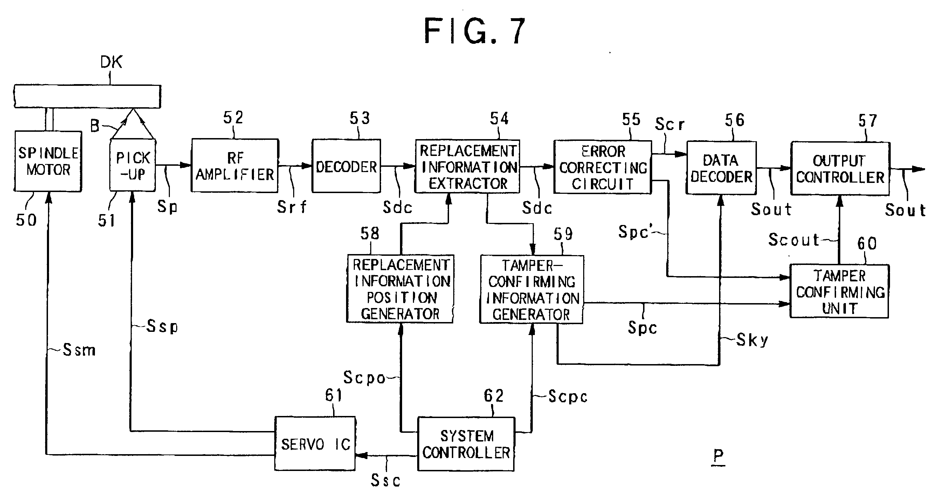

The embodiment of an information reproducing apparatus included in the information recording and reproducing system of the first embodiment will be described with reference to FIG. 7 and FIG. 8, this time.

FIG. 7 is a block diagram showing the schematic structure of the information reproducing apparatus according to the first embodiment, and FIG. 8 is a flow chart showing the reproducing processing in the information reproducing apparatus.

As illustrated in FIG. 7, the information reproducing apparatus P of the first embodiment is provided with: a spindle motor 50; a pickup 51 as encrypting information detecting device, reproducing limit information detecting device, and key information detecting device; an RF (Radio Frequency) amplifier 52; a decoder 53; a replacement information extractor 54 as reproducing limit information extracting device and recording information extracting device; an error correcting circuit 55; a data decoder 56 as obtaining device and decoding device; an output controller 57 as output controlling device; a replacement information position generator 58; a tamper-confirming information extractor 59; a tamper confirming unit 60; a system controller 62; and a servo IC 61.

The operation of the information reproducing apparatus P will be described now.

The disk DK with the music D and the like recorded there by the above-mentioned information recording apparatus R is rotated by the predetermined number of rotation by the spindle motor 50 whose rotation is controlled according to the spindle control signal Ssm from the servo IC 61.

The pickup 51 irradiates the optical beam B for the information reproducing on the rotating disk DK, generates a detected signal Sp corresponding to the information pit formed on the disk DK, based on the reflected beam, and supplies the same signal Sp to the RF amplifier 52.

The detected signal Sp also includes the key information detected based on the reflected beam obtained by irradiating the optical beam B on the lead-in area, which is recorded in the lead-in area on the disk DK (Step S20 and S21).

A deviation between the condensing position of the optical beam B for reproducing and the position of the information track on the disk DK in the horizontal direction and in the vertical direction can be dissolved by moving the objective lens, not illustrated, within the pickup 51, in the horizontal direction and in the vertical direction, based on the pick up control signal Ssp from the servo IC 61, in the same way as in the case of information recording apparatus R1.

Therefore, the system controller 62 generates a control signal Ssc for supplying the spindle control signal Ssm and the pickup control signal Ssp to the servo IC 61 and supplies it to the servo IC 61.

The RF amplifier 52 generates an RF signal Srf corresponding to the data recorded on the disk DK, according to the supplied detected signal Sp, and supplies it to the decoder 53.

The decoder 53 performs the de-interleaving and the 8-16 demodulation on the RF signal Srf (refer to FIG. 6), generates a reproducing signal Sdc including the ECC block 30, and supplies it to the replacement information extractor 54.

The replacement information extractor 54 extracts the replacement information Scg inserted in the position, which is indicated by the position information Spo3 described later, in the ECC block included in the reproducing signal Sdc and supplies it to the tamper-confirming information extractor 59, and at the same time, supplies the reproducing signal Sdc after extracting the replacement information Scg to the error correcting circuit 55.

In parallel with this, the replacement information position generator 58 generates the position information Spo3 indicating the insertion position of the replacement information Scg for every ECC block 30 of the reproducing signal Sdc, according to the control signal Scpo from the system controller 63, in every ECC block 30, by using the insertion table which is used in common with the replacement information position generator 12, and supplies the same information Spo3 to the replacement information extractor 54.

Thus, the tamper-confirming information extractor 59 extracts the correspondence signal Spc from the supplied replacement information Scg, according to the control signal Scps from the system controller 62, and supplies it to the tamper confirming unit 60 (Step S22).

The tamper-confirming information extractor 59 also extracts the key information recorded in the lead-in area within the disk DK, and supplies the same information to the data decoder 56 as a key information signal $S_{ky}$.

The error correcting circuit 55 performs the error correcting processing on the ECC block 30 (ECC block 30 after extracting the replacement information Scg) included in the supplied reproducing signal Sdc by using the ECC in-codes 31 and the ECC out-codes 32, generates an error correcting signal Scr, and supplies it to the data decoder 56, and simultaneously supplies the correspondence signal Spc' corresponding to the reproducing limit information PC added to the music D other than the reproducing limit information PC inserted as the replacement information Scg (the tampering-possible signal Spc'), to the tamer confirming unit 60 (Step S23).

Thus, the data decoder 56 decodes the content key information which has been subjected to the error correction together with the music D, by using the key information signal $S_{ky}$, decodes the encryption of the music D itself by using the decoded content key information, and supplies the same to the output controller 57 as a music signal Sout.

The tamper confirming unit 60 compares the content of the correspondence signal Spc with the content of the correspondence signal Spc' (Step S24): only when the both signals are in one accord (coincidence; Step S24), it generates a control signal Scout to the effect that the output of the music signal Sout from the output controller 57 is allowed and supplies it to the output controller 57.

The output controller 66 finishes the reproducing processing by supplying the music signal Sout to an outside speaker and the like according to the original reproducing limit information PC, only when the control signal Scout permits the output of the music signal Sout. When the control signal Scout does not permit the output of the music signal Sout (no coincidence; Step S24), the reproducing processing is finished without output of the music signal Sout.

In parallel with this processing, the system controller 62 controls the operation of the above-mentioned components by generating the control signals Scpc, Scpo, and Ssc, and at the same time, controls the control processing of the overall information reproducing apparatus P. At this time, the information necessary for the control processing is supplied from the outside through an operation panel, not illustrated.

The operation state of the information reproducing apparatus P is displayed on a display unit of a liquid crystal display and the like, not illustrated, depending on the necessity.

As mentioned above, according to the operation of the information recording and reproducing system of the first embodiment, the reproducing limit information PC (the correspondence signal Spc') is added to the data, and separately from this, the same reproducing limit information PC (the correspondence signal Spc) is embedded on the music D in a way incapable of illegal detection. During reproducing of the music D and the like, coincidence between the added reproducing limit information PC (the correspondence signal Spc') and the embedded reproducing limit information PC (the correspondence signal Spc) is confirmed, and thereafter, the recording information is controlled to be supplied to the outside based on the reproducing limit information PC. Therefore, it is possible to prevent from the reproducing and output of the recording information according to the tampered information, even if the added reproducing limit information PC is illegally tampered.

Since the correspondence signal Spc of small information amount corresponding to the reproducing limit information PC in one-to-one is embedded, it is possible to recognize the existence of tamper of the reproducing limit information PC during reproducing of the music D and the like, by easy processing,

Further, since one part of the music D is replaced with the replacement information corresponding to the reproducing limit information PC, it is possible to superimpose the reproducing limit information PC in an incapable way of illegal detection assuredly.

Further, the key information for encrypting the content key information is recorded in the lead-in area, the encryption information is encrypted by using the key information during original recording of the music D and the like and then recorded, further the encryption of the content key information is decoded by using the key information during reproducing of the music D and the like, and thereafter, the content key information is used for decoding the music D and the like, thereby preventing illegal reproducing of the music D and the like effectively.

(II) Second embodiment

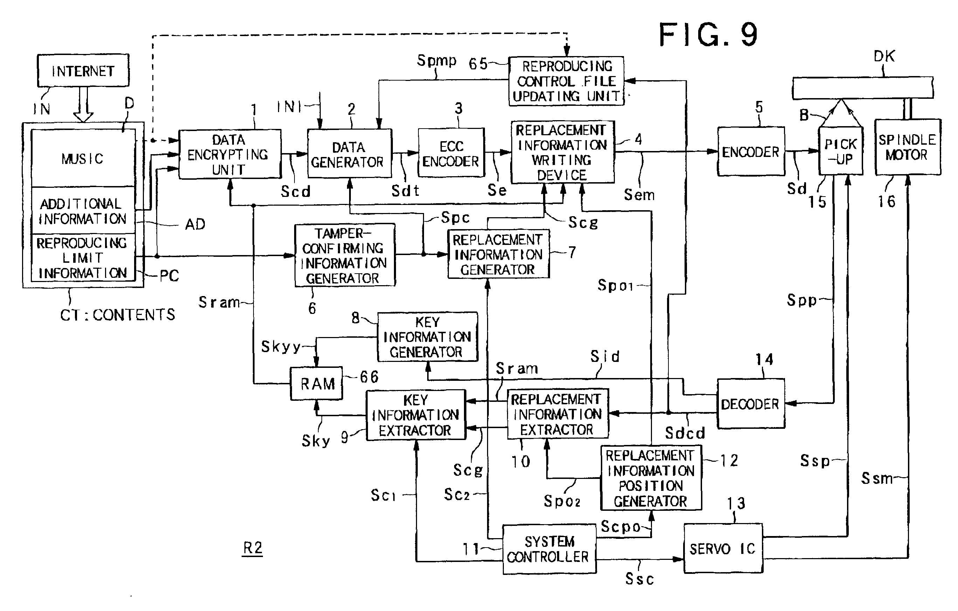

This time, the second embodiment of the present invention will be described with reference to FIG. 9 to FIG. 12.

In the above-mentioned first embodiment, the key information is recorded, embedded on the start information and the like recorded in the lead-in area. In the following second embodiment, however, the key information is recorded in the data area of the disk DK together with the music D and the like and used for the recording processing thereafter.

(A) Second embodiment of an information recording apparatus

The embodiment of an information recording apparatus included in the information recording and reproducing system of the second embodiment will be described with reference to FIGs. 9 to 11.

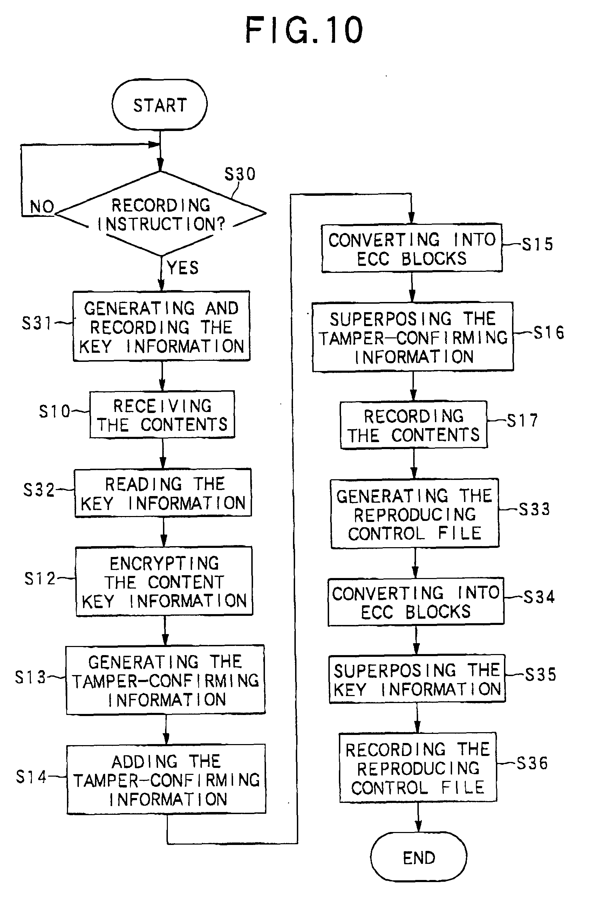

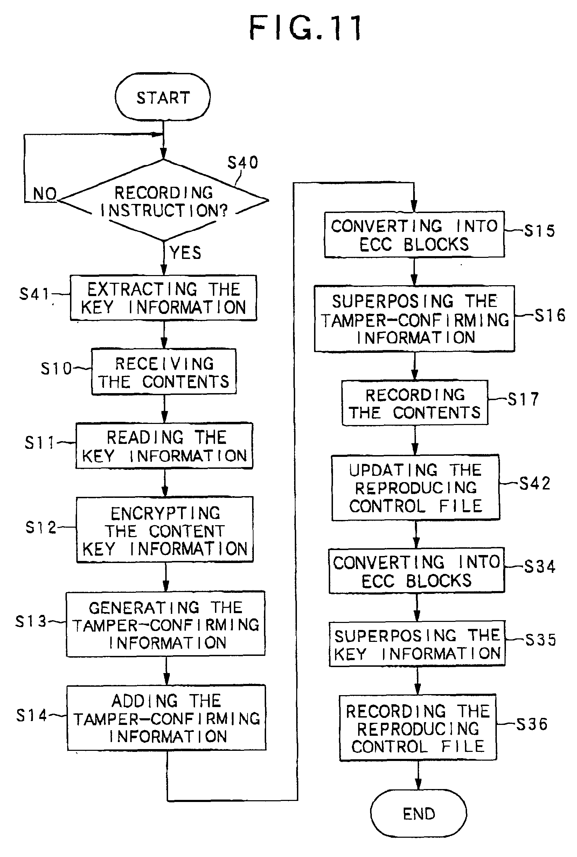

FIG. 9 is a block diagram showing the schematic structure of the information recording apparatus according to the second embodiment, and FIG. 10 and FIG. 11 are flow charts showing the recording processing in the information recording apparatus.

In the block diagram shown in FIG. 9, a detailed description of the same components as in the block diagram shown in FIG. 1 is omitted, with the same reference numerals attached there

As illustrated in FIG. 9, the information recording apparatus R2 of the second embodiment comprises a reproducing control file updating unit 65 and a RAM (Random Access Memory) 66, in addition to the structure of the information recording apparatus R1 of the first embodiment.

The recording operation according to the second embodiment will be described this time.

The disk initialization processing performed before the recording of the actual music D in the first embodiment is not performed in the second embodiment, but only the general disk initialization processing similar to the conventional one is performed before the recording of the music D in the second embodiment.

Of the above-mentioned components of the information recording apparatus R2, the components provided for the recording processing are the data encrypting unit 1, the data generator 2, the ECC encoder 3, the replacement information writing unit 4, the encoder 5, the tamper-confirming information generator 6, the replacement information generator 7, the key information extractor 9, the replacement information extractor 10, the system controller 11, the replacement information position generator 12, the servo IC 13, the decoder 14, the pickup 15, the spindle motor 16, and the reproducing control file updating unit 65, and the RAM 66.

The recording processing in the case of recording the contents CT on the disk DK just after the disk initialization, where any one of the contents CT including the music D and the like is recorded, will be described with reference to FIG. 10. In the flow chart shown in FIG. 10, the same processing as that in the flow chart shown in FIG. 3 will not be described here with the same step numbers attached.

In the recording processing, an operating unit, not illustrated, confirms whether an operation of instructing a recording start of the music D and the like is executed or not (Step S30).

When the operation of instructing the recording start is not executed (NO; Step S30), the operating unit waits as it is. When the same operation is executed (YES; Step S30), the pickup 15 detects the identification information particular to each disk DK from the corresponding disk DK, in the same way as in the first embodiment, generates a detected signal Spp including the identification information, and supplies it to the decoder 14.

The decoder 14 extracts the identification information from the detected signal Spp, generates an identification information signal Sid, and supplies it to the key information generator 8.

Thus, the key information generator 8 generates the key information by using the identification information, generates a key information signal $S_{kyy}$ including the key information, and temporarily stores it within the RAM 66 (Step S31).

The contents CT delivered through the Internet IN are received by the data encrypting unit 1 (Step S10).

Here, the contents CT include the music D, the additional information AD, and the reproducing limit information PC, similarly to the first embodiment. These are all supplied to the data encrypting unit 1, especially the reproducing limit information PC is also supplied to the tamper-confirming information generator 6, and the music D is further supplied to the reproducing control file updating unit 65.

The key information stored in Step S31 is read out from the RAM 66 as a RAM signal Sram (Step S32). Thus, the data encrypting unit 1 encrypts the content key information by using the key information (Step S12), generates an encrypting signal Scd including the already-encrypted music D, the additional information AD, and the reproducing limit information PC, and supplies it to the data generator 2

By executing Step S13 to Step S17 in the first embodiment, the music D and the like are recorded in the data area of the disk DK together with the corresponding information as tamper confirming.

Upon completion of the recording of the music D and the like, the reproducing control file updating unit 65 generates a reproducing control file corresponding to the music D according to the recorded music D (Step S33). At this time, assuming that the music D consists of a plurality of songs, the reproducing control file includes the number of the songs, the total reproducing time of all the songs, the reproducing time of each song, each song title, song number, and the like.

The generated reproducing control file is supplied to the data generator 2 as a file signal Spmp, subjected to the same conversion processing into ECC blocks as performed on the music D in the data generator 2 and the ECC encoder 3, and supplied to the replacement information writing unit 4.

The replacement information writing unit 4 reads out the key information from the RAM 66 as the ram signal Sram, inserts the information of each bit in the ram signal Sram, into the insertion position within the ECC block included in the portion of the reproducing control file indicated by the position information Spo, generates a replacement data signal Sem, and supplies it to the encoder 5 (Step S35).

The encoder 5 performs the interleaving and the 8-16 modulation on the ECC block 30 included in the replacement data signal Sem to generate a recording data signal Sd and supply it to the pickup 15.

The pickup 15 controls the intensity of the recording optical beam B according to the recording data signal Sd and forms the corresponding information pit on the information track formed within the area which should be a data area on the disk DK, hence to record the reproducing control file with the key information inserted there, into the area which should be the data area, as the recording data signal Sd (Steps S36), thereby finishing a series of the first recording processing.

The recording processing in the case of additionally recording the contents CT including the music D and the like into the disk DK where the same contents CT have been already recorded together with the corresponding reproducing control file, will be described with reference to FIG. 11. In the flow chart shown in FIG. 11, a detailed description of the same processing as shown by the flow chart in FIG. 3 and FIG. 10 will be omitted, with the respective same step numbers attached there.

In the recording processing, an operating unit, not illustrated, confirms whether an operation of instructing additional recording of the music D and the like is executed or not (Step S40).

When the operation of instructing the additional recording is not executed (NO; Step S40), the operating unit waits as it is, When the same operation is executed (YEA; Step S40), the pickup 15 detects the reproducing control file from the data area of the disk DK by using the optical beam B, generates a detected signal Spp including the reproducing control file, and supplies it to the decoder 14.

The decoder 14 decodes the detected signal Spp, generates a decode signal Sdcd including the reproducing control file, and supplies it to the replacement information extractor 10 and the reproducing control file updating unit 65.

In parallel with this, the replacement information position generator 12 generates the position information Spo2 indicating the insertion position of the ram signal Sram in each ECC block of the decode signal Sdcd, in every ECC block, by using the insertion table, based on the control signal Scpo from the system controller 11, and supplies the above information Spo2 to the replacement information extractor 10.

Thus, the replacement information extractor 10 extracts the ram signal Sram inserted into the position indicated by the position information Spo2 in the ECC block included in the decode signal Sdcd, and supplies the above signal Sram to the key information extractor 9.

The key information extractor 9 extracts the key information recorded together with the reproducing control file from the ram signal Sram, according to the control signal Sc1 from the system controller 11, generates a key information signal $S_{ky}$, and supplies it to the RAM 66 (Step S41).

The contents CT delivered through the Internet IN are received by the data encrypting unit 1 (Step S10).

Here, the contents CT include the music D, the additional information AD, and the reproducing limit information PC, similarly to the first embodiment. They are all supplied to the data encrypting unit 1, especially the reproducing limit information PC is also supplied to the tamper-confirming information generator 6, and further the music D is also supplied to the reproducing control file updating unit 65.

The key information stored in the above Step S41 is read out from the RAM 66 as the ram signal Sram (Step S32). Then, the data encrypting unit 1 encrypts the content key information by using this key information (Step S12), generates an encrypting signal Scd including the music D already encrypted, the additional information AD, and the reproducing limit information PC, and supplies it to the data generator 2.

By executing Step S13 to Step S17 in the first embodiment, the music D and the like are additionally recorded in the data area of the disk DK together with the corresponding information for the tamper confirming.

When the additional recording of the music D and the like is finished, the reproducing control file updating unit 65 updates the reproducing control file (which is entered, included in the decode signal Sdcd) corresponding to the music D, according to the recorded music D (Step S42).

The updated reproducing control file is recorded within the area which should be the data area, by the processing of Step S34 to Step S36 shown in FIG. 10, thereby finishing a series of the second and further recording processing.

(B) Second embodiment of an information reproducing apparatus

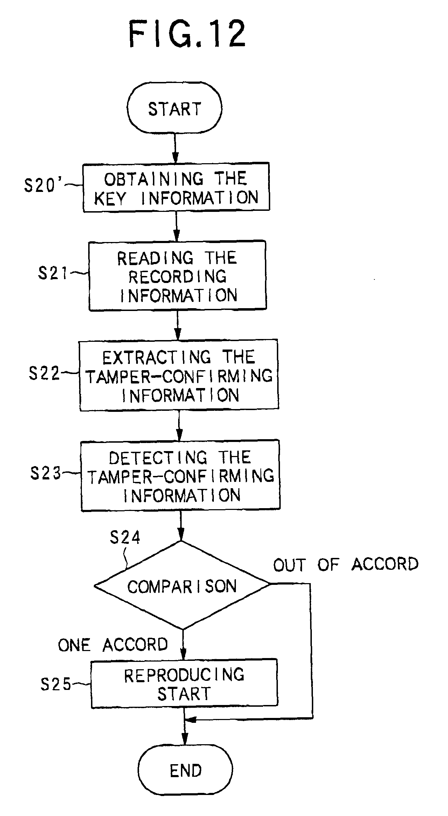

The embodiment of an information reproducing apparatus included in the information recording and reproducing system of the second embodiment will be described with reference to FIG. 12.

FIG. 12 is a flow chart showing the reproducing processing in the information reproducing apparatus according to the second embodiment.

Since the structure of the information reproducing apparatus according to the second embodiment is basically the same as that of the information reproducing apparatus P of the first embodiment shown in FIG. 7, a detailed description will be omitted.

In the flow chart shown in FIG. 12, the same processing as shown by the flow chart in FIG. 8 will not be described here, with the same step numbers respectively attached there.

In the reproducing of the music D and the like from the disk DK where the music D and the like are recorded by the above-mentioned information recording apparatus R2, the disk DK is rotated by the predetermined number of rotation by the spindle motor 50 whose rotation is controlled based on the spindle control signal Ssm from the servo IC 61.

The pickup 51 irradiates the optical beam B for information reproducing on the rotating disk DK, generates a detected signal Sp corresponding to the information pit formed on the disk DK, based on the reflected light, and supplies the above signal Sp to the RF amplifier 52.

The detected signal Sp includes the reproducing control file which is recorded in the data area of the disk DK and detected based on the reflected light obtained by irradiating the optical beam B on the data area, and the above key information is obtained from the reproducing control file by the replacement information extractor 54 and the replacement information position generator 58 (Step S20').

Hereinafter, Step S21 to Step S25 described in FIG. 9 will be executed, thereby performing the output control processing in the reproducing, in the same way as in the first embodiment.

As set forth hereinabove, according to the operation of the information recording and reproducing system of the second embodiment, since the key information is inserted and stored into the reproducing control file within the data area not within the lead-in area, in addition to the effect through the operation of the information recording and reproducing system of the first embodiment, there is no fear of rewriting the key information by mistake during the repeated recording of the music D and the like.

In the above-mentioned embodiment, though the one-to-one correspondence signal Spc to the reproducing limit information PC is embedded on the contents for confirming the tamper by comparison, the reproducing limit information PC itself may be embedded thereon as the replacement information Scg. In this case, the processing of Step S13 shown in FIG. 3 is not necessary.

In the above-mentioned embodiment, though the description has been made in the case of recording the replacement information 35 by embedding the same replacement information 35 into a predetermined position within the ECC block 30, the replacement information 35 may be recorded in a disk DK by embedding the same replacement information 35 within the music D and the like by use of a watermark technique.

Further, a program corresponding to the flow charts shown by FIGs. 2, 3, 8, and FIGs. 10 to 12 may be recorded in an information recording medium such as a flexible disk or a hard disk, and read out and executed by a general computer, thereby working the computer as the system controller 11 or 62 in the above embodiments.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. An information recording apparatus (R1) for recording reproducing limit information (PC) for controlling reproducing manner of recording information which is encrypted and supplied from an external source to be recorded in a recording medium (DK), together with the recording information, into the recording medium, **characterized in that** said apparatus comprises;

   an adding device (1) for adding the reproducing limit information to the supplied recording information to generate added recording information;
   an embedding device (4) for embedding the reproducing limit information on the recording information within the generated added recording information in a way of preventing from illegal detection to generate embedded recording information; and
   a recording device (15) for recording the generated embedded recording information into the recording medium.

2. The information recording apparatus (R1) according to Claim 1, wherein
   the embedding device (4) embeds correspondence information corresponding to the reproducing limit information in one-to-one and having smaller information amount than the reproducing limit information, on the recording information, in a way of preventing from illegal detection to generate the embedded recording information.

3. The information recording apparatus according to Claim 1 or 2, wherein
   the embedding device (4) comprises:

   a replacement information generating device (7) for generating replacement information by using the reproducing limit information; and
   a replacing device (4) for replacing one part of the recording information with the generated replacement information to generate the embedded recording information.

4. The information recording apparatus according to any one of Claims 1 to 3, further comprising:

   a detecting device (15) for detecting identification information particular to each recording medium and previously recorded in the recording medium, prior to the recording of the embedded recording information; and
   a key information generating device (9) for generating key information for encrypting cryptographic information used for encrypting the recording information, by using the detected identification information, wherein
   the embedding device (4) embeds the generated key information on start information detected at starting the reproducing of the recording information to generate embedded start information, prior to the recording of the embedded recording information, and
   the recording device (15) records the generated embedded start information into a start information recording area that is an area on the recording medium where the start information is to be recorded, prior to the recording of the embedded recording information.

5. The information recording apparatus (R1) according to Claim 4, further comprising:

   a detecting device (15) for detecting the key information from the start information recording area when recording the embedded recording information into the recording medium; and
   a cryptographic information encrypting device (1) for encrypting the cryptographic information by using the key information to generate encrypted cryptographic information,

   wherein
   the adding device (1) adds the reproducing limit information and the encrypted cryptographic information to the recording information when recording the embedded recording information into the recording medium to generate the added recording information.

**6.** The information recording apparatus (R1) according to any one of Claims 1 to 3, further comprising:

a detecting device (15) for detecting identification information particular to each recording medium and previously recorded in the recording medium, prior to the recording of the embedded recording information; and

a key information generating device (9) for generating key information for encrypting cryptographic information used for encrypting the recording information, by using the detected identification information, wherein

the embedding device (4) embeds the generated key information on content information indicating the content of the recording information to generate embedded content information, prior to the recording of the embedded recording information, and

the recording device (15) records the generated embedded content information in the recording medium.

**7.** The information recording apparatus (R1) according to Claim 6, further comprising:

a detecting device (15) for detecting the key information from the recording medium when recording the embedded recording information into the recording medium; and

a cryptographic information encrypting device (1) for encrypting the cryptographic information by using the key information to generate the encrypted cryptographic information,

wherein

the adding device (1) adds the reproducing limit information and the encrypted cryptographic information to the recording information to generate the added recording information, when recording the embedded recording information into the recording medium.

**8.** An information reproducing apparatus (P) for reproducing recording information, which is encrypted and recorded with an reproducing limit information (PC) for controlling reproducing manner of the recording information in a recording medium (DK), based on the reproducing limit information, said reproducing limit information which is added to the recording information and also embedded on the recording information in a way of preventing from illegal detection, **characterized in that** said information reproducing apparatus (P) comprises:

a reproducing limit information detecting device (51) for detecting the added reproducing limit information;

a reproducing limit information extracting device (54) for extracting the embedded reproducing limit information from the recording information;

a recording information extracting device (54) for extracting original recording information from the recording information on which the reproducing limit information is embedded; and

an output control device (57) for, only when the detected reproducing limit information matches the extracted reproducing limit information, supplying the extracted original recording information based on the reproducing limit information.

**9.** The information reproducing apparatus, according to Claim 8, wherein

said recording medium (DK) having a start information recording area, said start information recording area in which start information detected at starting the reproducing of the recording information is recorded, said start information on which key information for encrypting cryptographic information used for encrypting the recording information is embedded, said key information which is generated by using identification information, said identification information particular to each recording medium and recorded in the recording medium, said cryptographic information which is encrypted by using the key information and added to the recording information to which the reproducing limit information (PC) is added,

wherein said information reproducing apparatus (P) further comprises:

a key information detecting device (51) for detecting the key information from the start information recording area;

an encrypted cryptographic information detecting device (51) for detecting the encrypted cryptographic information from the recording medium;

an obtaining device (56) for decoding the detected encrypted cryptographic information by using the detected key information and obtaining original cryptographic information; and

a decoding device (56) for decoding the extracted original recording information by using the obtained original cryptographic information and supplying the decoded recording information to the output control device.

**10.** The information reproducing apparatus (P) according to Claim 8, wherein

said recording medium (DK) in which content information indicating the content of the recording information is recorded, said content information on which key information for encrypting cryptographic information used for encrypting the recording information is embedded, said key information which is generated by using identification information, said identification information particular to each recording medium and recorded in the recording medium, said cryptographic information which is encrypted by using the key information and added to the recording information to which the reproducing limit information (PC) is added,

wherein said information reproducing apparatus (P) further comprises:

a key information detecting device (51) for detecting the key information from the recording medium;

an encrypted cryptographic information detecting device (51) for detecting the encrypted cryptographic information from the recording medium;

an obtaining device (56) for decoding the detected encrypted cryptographic information by using the detected key information and obtaining original cryptographic information; and

a decoding device (56) for decoding the extracted original recording information by using the obtained original cryptographic information and supplying the decoded recording information to the output control device.

11. An information recording method for recording reproducing limit information (PC) for controlling reproducing manner of recording information which is encrypted and supplied from an external source to be recorded in a recording medium (DK), together with the recording information, into the recording medium, **characterized in that** said method comprises:

an adding process for adding the reproducing limit information (PC) to the supplied recording information to generate added recording information;

an embedding process for embedding the reproducing limit information (PC) on the recording information within the generated added recording information in a way of preventing from illegal detection to generate embedded recording information; and

a recording process for recording the generated embedded recording information into the recording medium (DK).

12. The information recording method according to Claim 11, wherein

the embedding process embeds correspondence information corresponding to the reproducing limit information in one-to-one and having smaller information amount than the reproducing limit information (PC), on the recording information, in a way of preventing from illegal detection to generate the embedded recording information.

13. The information recording method according to Claim 11 or 12, wherein

the embedding process comprises:

a replacement information generating process for generating replacement information by using the reproducing limit information (PC); and a replacing process for replacing one part of the recording information with the generated replacement information to generate the embedded recording information.

14. The information recording method according to any one of Claims 11 to 13, further comprising:

a detecting process for detecting identification information particular to each recording medium (DK) and previously recorded in the recording medium, prior to the recording of the embedded recording information; and

a key information generating process for generating key information for encrypting cryptographic information used for encrypting the recording information, by using the detected identification information, wherein

the embedding process embeds the generated key information on start information detected at starting the reproducing of the recording information to generate embedded start information, prior to the recording of the embedded recording information, and

the recording process records the generated embedded start information into a start information recording area that is an area on the recording medium (DK) where the start information is to be recorded, prior to the recording of the embedded recording information.

15. The information recording method according to Claim 14, further comprising:

a detecting process for detecting the key information from the start information recording area when recording the embedded recording information into the recording medium (DK); and

a cryptographic information encrypting process for encrypting the cryptographic information by using the key information to generate encrypted cryptographic information, wherein

the adding process adds the reproducing limit information (PC) and the encrypted cryptographic information to the recording information when recording the embedded recording information into the recording medium (DK) to generate the added recording information.

16. The information recording method according to any one of Claims 11 to 13, further comprising:

a detecting process for detecting identification information particular to each recording medium (DK) and previously recorded in the recording medium, prior to the recording of the embedded recording information; and
a key information generating process for generating key information for encrypting cryptographic information used for encrypting the recording information, by using the detected identification information, wherein
the embedding process embeds the generated key information on content information indicating the content of the recording information to generate embedded content information, prior to the recording of the embedded recording information, and
the recording process records the generated embedded content information in the recording medium (DK).

17. The information recording method according to Claim 16, further comprising:

a detecting process for detecting the key information from the recording medium (DK) when recording the embedded recording information into the recording medium (DK); and
a cryptographic information encrypting process for encrypting the cryptographic information by using the key information to generate the encrypted cryptographic information, wherein
the adding process adds the reproducing limit information and the encrypted cryptographic information to the recording information to generate the added recording information, when recording the embedded recording information into the recording medium (DK),

18. An information reproducing method for reproducing recording information, which is encrypted and recorded with an reproducing limit information (PC) for controlling reproducing manner of the recording information in a recording medium (DK), based on the reproducing limit information, said reproducing limit information which is added to the recording information and also embedded on the recording information in a way of preventing from illegal detection, **characterized in that** said method comprises:

a reproducing limit information detecting process for detecting the added reproducing limit information (PC);

a reproducing limit information extracting process for extracting the embedded reproducing limit information from the recording information;
a recording information extracting process for extracting original recording information from the recording information on which the reproducing limit information (PC) is embedded; and
an output control process for, only when the detected reproducing limit information (PC) matches the extracted reproducing limit information (PC), supplying the extracted original recording information based on the reproducing limit information (PC).

19. The information reproducing method, according to Claim 18, wherein

said recording medium having a start information recording area, said start information recording area in which start information detected at starting the reproducing of the recording information is recorded, said start information on which key information for encrypting cryptographic information used for encrypting the recording information is embedded, said key information which is generated by using identification information, said identification information particular to each recording medium (DK) and recorded in the recording medium, said cryptographic information which is encrypted by using the key information and added to the recording information to which the reproducing limit information (PC) is added,

wherein said information reproducing method further comprises:

a key information detecting process for detecting the key information from the start information recording area;
an encrypted cryptographic information detecting process for detecting the encrypted cryptographic information from the recording medium (DK);
an obtaining process for decoding the detected encrypted cryptographic information by using the detected key information and obtaining original cryptographic information; and
a decoding process for decoding the extracted original recording information by using the obtained original cryptographic information and supplying the decoded recording information to the output control process.

20. The information reproducing method, according to Claim 18, wherein

said recording medium (DK) in which content information indicating the content of the recording information is recorded, said content information on which key information for encrypting cryptographic information used for encrypting the recording information is embedded, said key information which is generated by using identification information, said identification information particular to each recording medium and recorded in the recording medium, said cryptographic information which is encrypted by using the key information and added to the recording information to which the reproducing limit information (PC) is added,

wherein said information reproducing method further comprises:

a key information detecting process for detecting the key information from the recording medium (DK);
an encrypted cryptographic information detecting process for detecting the encrypted cryptographic information from the recording medium (DK);
an obtaining process for decoding the detected encrypted cryptographic information by using the detected key information and obtaining original cryptographic information; and
a decoding process for decoding the extracted original recording information by using the obtained original cryptographic information and supplying the decoded recording information to the output control process.

21. An information recording medium in which a recording control program is recorded in a readable way by a recording computer included in an information recording apparatus (R1) for recording reproducing limit information (PC) for controlling reproducing manner of recording information which is encrypted and supplied from an external source to be recorded in a recording medium (DK), together with the recording information, into the recording medium, **characterized in that** said recording program causes the recording computer to function as:

an adding device (1) for adding the reproducing limit information to the supplied recording information to generate added recording information;
an embedding device (4) for embedding the reproducing limit information on the recording information within the generated added recording information in a way of preventing from illegal detection to generate embedded recording information; and
a recording device (15) for recording the generated embedded recording information into the recording medium.

22. The information recording medium, according to Claim 21, wherein
the embedding device (4) embeds correspondence information corresponding to the reproducing limit information in one-to-one and having smaller information amount than the reproducing limit information, on the recording information, in a way of preventing from illegal detection to generate the embedded recording information.

23. The information recording medium, according to Claim 21 or 22, wherein
the embedding device (4) comprises:

a replacement information generating device (7) for generating replacement information by using the reproducing limit information; and
a replacing device (4) for replacing one part of the recording information with the generated replacement information to generate the embedded recording information.

24. The information recording medium according to any one of Claims 21 to 23, wherein said recording program causes the recording computer to further function as:

a detecting device (15) for detecting identification information particular to each recording medium and previously recorded in the recording medium, prior to the recording of the embedded recording information; and
a key information generating device (9) for generating key information for encrypting cryptographic information used for encrypting the recording information, by using the detected identification information, wherein
the embedding device (4) embeds the generated key information on start information detected at starting the reproducing of the recording information to generate embedded start information, prior to the recording of the embedded recording information, and
the recording device (15) records the generated embedded start information into a start information recording area that is an area on the recording medium where the start information is to be recorded, prior to the recording of the embedded recording information.

25. The information recording medium according to Claim 24,
wherein said recording program causes the recording computer to further function as:

a detecting device (15) for detecting the key information from the start information recording area when recording the embedded recording information into the recording medium; and
a cryptographic information encrypting device (1) for encrypting the cryptographic information by using the key information to generate encrypted cryptographic information, wherein the adding device (1) adds the reproducing limit information and the encrypted cryptographic information to the recording information when recording the embedded recording information into the recording medium to generate the added recording information.

26. The information recording medium according to any one of Claims 21 to 23, wherein said recording program causes the recording computer to further function as:

a detecting device (15) for detecting identification information particular to each recording medium and previously recorded in the recording medium, prior to the recording of the embedded recording information; and
a key information generating device (9) for generating key information for encrypting cryptographic information used for encrypting the recording information, by using the detected identification information, wherein
the embedding device (4) embeds the generated key information on content information indicating the content of the recording information to generate embedded content information, prior to the recording of the embedded recording information, and
the recording device (15) records the generated embedded content information in the recording medium.

27. , The information recording medium according to Claim 26, wherein said recording program causes the recording computer to further function as:

a detecting device (15) for detecting the key information from the recording medium when recording the embedded recording information into the recording medium; and
a cryptographic information encrypting device (1) for encrypting the cryptographic information by using the key information to generate the encrypted cryptographic information, wherein
the adding device (1) adds the reproducing limit information and the encrypted cryptographic information to the recording information to generate the added recording information, when recording the embedded recording information into the recording medium.

28. An information recording medium in which a reproducing control program is recorded in a readable way by a reproducing computer included in an information reproducing apparatus (P) for reproducing recording information, which is encrypted and recorded with an reproducing limit information (PC) for controlling reproducing manner of the recording information in a recording medium (DK), based on the reproducing limit information, said reproducing limit information which is added to the recording information and also embedded on the recording information in a way of preventing from illegal detection, **characterized in that** said reproducing program causes the reproducing computer to function as:

a reproducing limit information detecting device (51) for detecting the added reproducing limit information;
a reproducing limit information extracting device (54) for extracting the embedded reproducing limit information from the recording information;
a recording information extracting device (54) for extracting original recording information from the recording information on which the reproducing limit information is embedded; and
an output control device (57) for, only when the detected reproducing limit information matches the extracted reproducing limit information, supplying the extracted original recording information based on the reproducing limit information.

29. The information recording medium, according to Claim 28, wherein
said recording medium (DK) having a start information recording area, said start information recording area in which start information detected at starting the reproducing of the recording information is recorded, said start information on which key information for encrypting cryptographic information used for encrypting the recording information is embedded, said key information which is generated by using identification information, said identification information particular to each recording medium and recorded in the recording medium, said cryptographic information which is encrypted by using the key information and added to the recording information to which the reproducing limit information (PC) is added,
wherein said reproducing program causes the reproducing computer to further function as:

a key information detecting device (51) for detecting the key information from the start information recording area;
an encrypted cryptographic information detecting device (51) for detecting the encrypted cryptographic information from the recording medium;
an obtaining device (56) for decoding the detected encrypted cryptographic information by using the detected key information and obtaining original cryptographic information; and a decoding device (56) for decoding the extracted original recording information by using the obtained original cryptographic information and supplying the decoded recording information to the output control device,

30. The information recording medium according to Claim 28, wherein

said recording medium (DK) in which content information indicating the content of the recording information is recorded, said content information on which key information for encrypting cryptographic information used for encrypting the recording information is embedded, said key information which is generated by using identification information, said identification information particular to each recording medium and recorded in the recording medium, said cryptographic information which is encrypted by using the key information and added to the recording information to which the reproducing limit information (PC) is added,

wherein said reproducing program causes the reproducing computer to further function as:

a key information detecting device (51) for detecting the key information from the recording medium;

an encrypted cryptographic information detecting device (51) for detecting the encrypted cryptographic information from the recording medium;

an obtaining device (56) for decoding the detected encrypted cryptographic information by using the detected key information and obtaining original cryptographic information; and

a decoding device (56) for decoding the extracted original recording information by using the obtained original cryptographic information and supplying the decoded recording information to the output control device.

# FIG. 1

EP 1 207 529 A2

# FIG. 2

START

CONVERTING INTO ECC BLOCKS — S1

GENERATING KEY INFORMATION — S2

REPLACEMENT — S3

RECORDING — S4

END

# FIG. 3

```
                START

S10 ──  RECEIVING
        THE CONTENTS

S11 ──  EXTRACTING THE
        KEY INFORMATION

S12 ──  ENCRYPTING
        THE CONTENT
        KEY INFORMATION

S13 ──  GENERATING THE
        TAMPER-CONFIRMING
        INFORMATION


        ADDING THE
        TAMPER-CONFIRMING  ── S14
        INFORMATION

        CONVERTING INTO   ── S15
        ECC BLOCKS

        SUPERPOSING THE
        TAMPER-CONFIRMING  ── S16
        INFORMATION

        RECORDING         ── S17

                END
```

# FIG. 4A

20: DATA SECTOR

DATA SECTOR (2064Byte)

| 4Byte | 2Byte | 6Byte | 2048Byte | 4Byte |
|---|---|---|---|---|
| ID | IEC | RSV | DATA | EDC |
| 21 | 22 | 23 | 24 | 25 |

# FIG. 4B

20

| 21 | 22 | 23 | | | |
|---|---|---|---|---|---|
| ID | IED | RSV | DATA | | |
| | | | DATA | | |
| | | | DATA | | |
| | | | ..... | | |
| | | | DATA | | |
| | | | DATA | EDC | |
| | | | 24 | 25 | |

12 LINES

172Byte

30: ECC BLOCK

33: DATA BLOCK

31: ECC INNER CODE

| D0.0 | D0.1 | ... | D0.170 | D0.171 | D0.172 | ... | D0.181 | 34 |
|---|---|---|---|---|---|---|---|---|
| D1.0 | D1.1 | ... | D1.170 | D1.171 | D1.172 | ... | D1.181 | 34 |
| D2.0 | D2.1 | ... | D2.170 | D2.171 | D2.172 | ... | D2.181 | 34 |
| D3.0 | D3.1 | ... | D3.170 | D3.171 | D3.172 | ... | D3.181 | 34 |
| ..... | ..... | ..... | ..... | ..... | ..... | ..... | ..... | |
| D190.0 | D190.1 | ... | D190.170 | D190.171 | D190.172 | ... | D190.181 | 34 |
| D191.0 | D191.1 | ... | D191.170 | D191.171 | D191.172 | ... | D191.181 | 34 |
| D192.0 | D192.1 | ... | D192.170 | D192.171 | D192.172 | ... | D192.181 | 34 |
| ... | ... | ... | ... | ... | ... | ... | ... | 32 |
| D207.0 | D207.1 | ... | D207.170 | D207.171 | D207.172 | ... | D207.181 | 34 |

192 LINES (12×16)

P0 (16 LINES)

172Byte

P1 (10Byte)

31: ECC INNER CODE
32: ECC OUTER CODE
34: CORRECTION BLOCK

# FIG. 5

EP 1 207 529 A2

30': ECC BLOCK

33:DATA BLOCK                                              31

| | | | | | | | | |
|---|---|---|---|---|---|---|---|---|
| D0.0 | D0.1 | · · · | D0.170 | D0.171 | D0.172 | D0.173 | · · · | D0.181 } 34 |
| D1.0 | D1.1 | · · · | D1.170 | D1.171 | D1.172 | D1.173 | · · · | D1.181 } 34 |
| D2.0 | D2.1 | · · · | D2.170 | D2.171 | D2.172 | D2.173 | · · · | D2.181 } 34 |
| D3.0 | D3.1 | · · · | D3.170 | D3.171 | D3.172 | D3.173 | · · · | D3.181 } 34 |
| : | : | : | : | : | : | : | : | : |
| D190.0 | D190.1 | · · · | D190.170 | D190.171 | D190.172 | D190.173 | · · · | D190.181 } 34 |
| D191.0 | D191.1 | · · · | <u>35</u> | D191.171 | D191.172 | D191.173 | · · · | D191.181 } 34 |
| D192.0 | D192.1 | · · · | D192.170 | D192.171 | <u>35</u> | D192.173 | · · · | D192.181 } 34 |
| : | : | : | : | : | : | : | : | : |
| D207.0 | D207.1 | · · · | D207.170 | D207.171 | D207.172 | D207.173 | · · · | D207.181 } 34 |

192 LINES (12×16)

P0 (16LINES)

32

172Byte                                  P1(10Byte)

31:ECC INNER CODE      34:CORRECTION BLOCK
32:ECC OUTER CODE      35:SUBSTITUTE INFORMATION

# FIG. 6

30′: ECC BLOCK

34: CORRECTION BLOCK | 34: CORRECTION BLOCK

| D0.0 | D0.1 | D0.172 | D0.181 | D191.0 | D191.171 | D191.172 | D191.181 | D192.0 | D207.181 |

33: DATA BLOCK (172BYTES) | 31: ECC INNER CODE (10BYTES) | 33: DATA BLOCK (172BYTES) | 31: ECC INNER CODE (10BYTES) | 32: ECC OUTER CODE (182×16BYTES)

INTERLEAVE⤵ ⤴DEINTERLEAVE

40: RECORDING SECTOR

| 21 ⏞ | | 21 ⏞ | 40 | | | 21 ⏞ | 40 |
| I D | 0 | 12 | I D | RECORDING SECTOR | | I D | RECORDING SECTOR |

:182BYTES

(16 RECORDING SECTORS = 1 ECC BLOCK)

| H | 41 | H | 41 |
| HEADER | DATA | HEADER | DATA |

91BYTES | 91BYTES

8-16 MODULATION ⤵ ⤴ 8-16 DEMODULATION

| H′ | 43 | H′ | 43 | | H′ | 43 |
| HEADER | DATA | HEADER | DATA | | HEADER | DATA | ← DVD etc

42: SYNC FRAME | 42 | (26 SYNC FRAMES = 1 RECORDING SECTOR) | 42

EP 1 207 529 A2

# FIG. 7

EP 1 207 529 A2

# FIG. 8

START

S20 — OBTAINING THE
KEY INFORMATION

S21 — READING THE
RECORDING
INFORMATION

S22 — EXTRACTING THE
TAMPER-CONFIRMING
INFORMATION

S23 — DETECTING THE
TAMPER-CONFIRMING
INFORMATION

S24
COMPARISON

OUT OF ACCORD

ONE ACCORD

S25 — REPRODUCING
START

END

# FIG. 9

# FIG.10

START

S30 — RECORDING INSTRUCTION?
NO
YES

S31 — GENERATING AND RECORDING THE KEY INFORMATION

S10 — RECEIVING THE CONTENTS

S32 — READING THE KEY INFORMATION

S12 — ENCRYPTING THE CONTENT KEY INFORMATION

S13 — GENERATING THE TAMPER-CONFIRMING INFORMATION

S14 — ADDING THE TAMPER-CONFIRMING INFORMATION

CONVERTING INTO ECC BLOCKS — S15

SUPERPOSING THE TAMPER-CONFIRMING INFORMATION — S16

RECORDING THE CONTENTS — S17

GENERATING THE REPRODUCING CONTROL FILE — S33

CONVERTING INTO ECC BLOCKS — S34

SUPERPOSING THE KEY INFORMATION — S35

RECORDING THE REPRODUCING CONTROL FILE — S36

END

# FIG.11

```
                    ┌─────────┐
                    │  START  │
                    └─────────┘
                         │
                         ▼                   S40
         ┌──────◇◇◇◇◇◇◇◇◇◇◇◇◇◇◇◇◇◇
    NO   │     RECORDING
  ◀──────┤    INSTRUCTION?
         └──────◇◇◇◇◇◇◇◇◇◇◇◇◇◇◇◇◇◇
                         │ YES
                         ▼
              ┌─────────────────────┐
     S41─┤    EXTRACTING THE
              │   KEY INFORMATION   │
              └─────────────────────┘
                         │
                         ▼
              ┌─────────────────────┐
     S10─┤     RECEIVING
              │    THE CONTENTS     │
              └─────────────────────┘
                         │
                         ▼
              ┌─────────────────────┐
     S11─┤    READING THE
              │   KEY INFORMATION   │
              └─────────────────────┘
                         │
                         ▼
              ┌─────────────────────┐
              │     ENCRYPTING      │
     S12─┤    THE CONTENT
              │   KEY INFORMATION   │
              └─────────────────────┘
                         │
                         ▼
              ┌─────────────────────┐
              │   GENERATING THE    │
     S13─┤  TAMPER-CONFIRMING
              │     INFORMATION     │
              └─────────────────────┘
                         │
                         ▼
              ┌─────────────────────┐
              │    ADDING THE       │
     S14─┤  TAMPER-CONFIRMING
              │     INFORMATION     │
              └─────────────────────┘
```

```
              ┌─────────────────────┐
              │  CONVERTING INTO    │─S15
              │    ECC BLOCKS       │
              └─────────────────────┘
                         │
                         ▼
              ┌─────────────────────┐
              │  SUPERPOSING THE    │
              │ TAMPER-CONFIRMING   │─S16
              │    INFORMATION      │
              └─────────────────────┘
                         │
                         ▼
              ┌─────────────────────┐
              │     RECORDING       │─S17
              │   THE CONTENTS      │
              └─────────────────────┘
                         │
                         ▼
              ┌─────────────────────┐
              │    UPDATING THE     │
              │    REPRODUCING      │─S42
              │   CONTROL FILE      │
              └─────────────────────┘
                         │
                         ▼
              ┌─────────────────────┐
              │  CONVERTING INTO    │─S34
              │    ECC BLOCKS       │
              └─────────────────────┘
                         │
                         ▼
              ┌─────────────────────┐
              │  SUPERPOSING THE    │─S35
              │   KEY INFORMATION   │
              └─────────────────────┘
                         │
                         ▼
              ┌─────────────────────┐
              │   RECORDING THE     │
              │    REPRODUCING      │─S36
              │   CONTROL FILE      │
              └─────────────────────┘
                         │
                         ▼
                    ┌─────────┐
                    │   END   │
                    └─────────┘
```

# FIG.12

START

S20'— OBTAINING THE KEY INFORMATION

S21— READING THE RECORDING INFORMATION

S22— EXTRACTING THE TAMPER-CONFIRMING INFORMATION

S23— DETECTING THE TAMPER-CONFIRMING INFORMATION

S24

COMPARISON

OUT OF ACCORD

ONE ACCORD

S25— REPRODUCING START

END